(19) Europäisches Patentamt

European Patent Office

Office européen des brevets

(11) **EP 4 779 547 A1**

(12) **EUROPEAN PATENT APPLICATION**

(43) Date of publication:
   **22.07.2026 Bulletin 2026/30**

(21) Application number: **26152108.2**

(22) Date of filing: **15.01.2026**

(51) International Patent Classification (IPC):
   **G06Q 20/02** (2012.01)   **G06Q 20/08** (2012.01)
   **G06Q 20/40** (2012.01)

(52) Cooperative Patent Classification (CPC):
   **G06Q 20/027; G06Q 20/08; G06Q 20/4016;
   G06Q 20/405**

(84) Designated Contracting States:
   **AL AT BE BG CH CY CZ DE DK EE ES FI FR GB
   GR HR HU IE IS IT LI LT LU LV MC ME MK MT NL
   NO PL PT RO RS SE SI SK SM TR**
   Designated Extension States:
   **BA**
   Designated Validation States:
   **GE KH LA MA MD TN**

(30) Priority:   **17.01.2025   US 202519028154**

(71) Applicant: **Worldpay, LLC
   Symmes Township, OH 45249 (US)**

(72) Inventor: **KETTLER, Dennis A.
   Symmes Township, 45249 (US)**

(74) Representative: **Patel, Nikesh et al
   Venner Shipley LLP
   TIDE Bankside
   8 Emerson Street
   London SE1 9DU (GB)**

(54) **SYSTEMS AND METHODS FOR INTEGRATED DATA OPTIMIZATION FOR PROCESSING AN ELECTRONIC MESSAGE**

(57)   Systems and methods are disclosed for integrated data optimization for processing an electronic message. The method includes receiving a request from a first system for an electronic transaction; analyzing the request for the electronic transaction using one or more outcomes generated by a machine learning system that is trained based on a set of randomized training data processed using a plurality platforms, determining a plurality of possible combinations of paths for processing the electronic transaction based on the analysis of the request; determining a plurality of possible combination of tasks for processing the electronic transaction based on the analysis of the request; determining an optimized path among the plurality of possible combinations of paths; determining an optimal combination of tasks among the possible combination of tasks; and transmitting the electronic transaction via the optimized path using the optimal combination of tasks.

**Description**

<u>**TECHNICAL FIELD**</u>

This present disclosure relates generally to the field of machine learning and/or optimization of message processing rules. In particular, the present disclosure relates to analyzing data associated with a system for handling an electronic message, for example, using a machine learning algorithm.

<u>**BACKGROUND**</u>

Electronic messages are not always secure for transmitting sensitive data, which can make it challenging for service providers to preemptively identify potential threats and devise methodologies for preventing such threats to secure electronic messages. The existing methods are technically challenged in minimizing security breaches and maximizing positive user experience to create a system that deters attackers and is user-friendly. For example, traditional methods that implemented reduced authentication resulted in increased vulnerability to unauthorized access and fraudulent activities, as fewer layers of verification made it easier for malicious actors to exploit security gaps in the system.

Furthermore, analyzing transaction costs and making routing decisions may be complicated by both (i) mandatory state and Federal regulatory rules and (ii) voluntary agreements among issuers, networks, and processors, any of which may pertain to negotiated transaction volume/amount thresholds, negotiated markup rates, exemption from regulations, and preferences. As an example, under the "Durbin amendment" of the Dodd-Frank financial reform legislation of 2010, financial institutions having over $10B in assets may be considered "regulated," whereas financial institutions having less than $10B in assets may be "exempt." Moreover, many Debit Networks (e.g. Star, Jeanie, etc.) create "preferred rates" that may be different from "standard rates," and these rates may change from merchant to merchant, and/or from issuer to issuer. As a result, when compiling a "rate sheet," it can be important to know which merchants or issuers are preferred, and what the preferred rates are. Many networks also charge not only based on "standard" vs. "preferred," but also regulated vs. exempt, and based on card type (prepaid, business, etc.) and transaction volumes/amounts over time.

In addition, a failure to authorize a transaction may require a resubmission of the transaction and an increase in transaction costs associated with the resubmission. Accordingly, an undetermined probability that a transaction will be declined may further complicate the estimation of transaction costs across multiple networks.

Thus, while a static table of networks or issuers might provide some initial insights into costs, the real costs may depend on regulatory status and/or whether certain regulatory or contractual thresholds (maximums or minimums) have been reached in some given time period. Since actual costs or rates may depend on total numbers of transactions and a likelihood that a transaction will be declined, it can be difficult to predict the real costs and/or the ideal routing for any given transaction.

In addition to the cost of transactions, there are many other factors to consider in handling an electronic message, such as fraud prevention, security, and operational efficiency, and the interplay among these factors (e.g., fraud, security, cost, and efficiency) creates a complex landscape for systems processing electronic transactions. For example, while robust fraud detection measures may be desirable to mitigate significant financial losses and reputational damage, excessive security measures can lead to false positives, where legitimate transactions are flagged as suspicious, causing delays and customer dissatisfaction. Additionally, complex security measures can slow down transaction processing times, potentially resulting in lost sales and a poor user experience. The importance of these competing factors (e.g., fraud, security, cost, and efficiency) may vary depending on specific situations or tasks (e.g., fraud detection, chargeback management, refund optimization, authentication/ authorization optimization, etc.).

Thus, there is a desire for a system and method for allowing merchants to select a number of factors in a sequence to optimize routing electronic payment transactions, on a dynamic and granular level. However, since each transaction may have different criteria, or each merchant may have different objectives, a simple rule based system is not sufficient to achieve this outcome. Furthermore, there is a need for a system that routes electronic transactions and selects various security and/or routing mechanisms dynamically.

<u>**SUMMARY OF THE DISCLOSURE**</u>

The present disclosure solves the technical challenges typically encountered during electronic messaging by integrated sophisticated machine-learning algorithms using a plurality of factors associated with the electronic message, for improving overall system efficiency and scalability.

In some embodiments, a computer-implemented method includes: receiving, by one or more processors, a request from a first system for an electronic transaction; analyzing, by the one or more processors, the request for the electronic transaction using one or more outcomes generated by a machine learning system that is trained based on a set of randomized training data processed using a plurality platforms, wherein the analysis of the request comprises comparing data from the plurality of platforms, wherein the compared data from the plurality of platforms comprise outcomes from the plurality of platforms, wherein an outcome from one platform among the plurality of platforms affect an outcome from another platform among the plurality of platforms; determining, by the one or more processors, a plurality of possible combinations of paths for processing the electronic transaction based on the analysis of the request; determining, by the one or more processors, a plurality of possible combination of tasks for processing the electronic transaction based on the analysis of the request; determining, by the one or more processors, an optimized path among the plurality of possible combinations of paths; determining, by the one or more processors, an optimal combination of tasks among the possible combination of tasks; and transmitting, by the one or more processors, the electronic transaction via the optimized path using the optimal combination of tasks.

In some embodiments, a system includes: one or more processors of a computing system; and at least one non-transitory computer readable medium storing instructions which, when executed by the one or more processors, cause the one or more processors to perform operations including: receiving a request from a first system for an electronic transaction; analyzing the request for the electronic transaction using one or more outcomes generated by a machine learning system that is trained based on a set of randomized training data processed using a plurality of platforms, wherein the analysis of the request comprises comparing data from the plurality of platforms, wherein an outcome from one platform among the plurality of platforms affect an outcome from another platform among the plurality of platforms; determining, by the one or more processors, a plurality of possible combinations of paths for processing the electronic transaction based on the analysis of the request; determining, by the one or more processors, a plurality of possible combination of tasks for processing the electronic transaction based on the analysis of the request; determining, by the one or more processors, an optimized path among the plurality of possible combinations of paths; determining, by the one or more processors, an optimal combination of tasks among the possible combination of tasks; and transmitting, by the one or more processors, the electronic transaction via the optimized path using the optimal combination of tasks.

In some embodiments, a non-transitory computer readable medium, the non-transitory computer readable medium storing instructions which, when executed by one or more processors of a computing system, cause the one or more processors to perform operations including: receiving a request from a first system for an electronic transaction; analyzing the request for the electronic transaction using one or more outcomes generated by a machine learning system that is trained based on a set of randomized training data using a plurality of platforms, wherein the analysis of the request comprises comparing data from the plurality of platforms, wherein an outcome from one platform among the plurality of platforms affect an outcome from another platform among the plurality of platforms; determining, by the one or more processors, a plurality of possible combinations of paths for processing the electronic transaction based on the analysis of the request; determining, by the one or more processors, a plurality of possible combination of tasks for processing the electronic transaction based on the analysis of the request; determining, by the one or more processors, an optimized path among the plurality of possible combinations of paths; determining, by the one or more processors, an optimal combination of tasks among the possible combination of tasks; and transmitting, by the one or more processors, the electronic transaction via the optimized path using the optimal combination of tasks.

It is to be understood that both the foregoing general description and the following detailed description are examples and explanatory only, and are not restrictive of the detailed embodiments, as claimed.

## BRIEF DESCRIPTION OF THE DRAWINGS

The accompanying drawings, which are incorporated in and constitute a part of this specification, illustrate various example embodiments and together with the description, serve to explain the principles of the disclosed embodiments.

FIG. 1 is a diagram showing an example of a system for integrated data optimization for processing an electronic message, according to aspects of the present disclosure.

Fig. 2A is a diagram showing an example of an authorization optimization platform according to aspects of the present disclosure.

Fig. 2B is a diagram showing an example of a fraud detection platform according to aspects of the present disclosure.

Fig. 2C is a diagram showing an example of a chargeback detection platform according to aspects of the present disclosure.

Fig. 2D is a diagram showing an example of a token optimization platform according to aspects of the present disclosure.

Fig. 2E is a diagram showing an example of a refund optimization platform according to aspects of the present disclosure.

Fig. 2F is a diagram showing an example of an authentication optimization platform according to aspects of the present disclosure.

Fig. 2G is a diagram showing an example of a PIN suppression platform according to aspects of the present disclosure.

FIG. 3A is a flowchart of a process for integrated data optimization for processing an electronic message, according to aspects of the present disclosure.

FIG. 3B is a flowchart of a process for integrated data optimization for processing an electronic message, according to aspects of the present disclosure.

FIG. 4 shows an example machine learning training flow chart, according to aspects of the present disclosure.

FIG. 5 illustrates an implementation of a computer system that executes techniques presented herein.

## DETAILED DESCRIPTION OF EMBODIMENTS

While principles of the present disclosure are described herein with reference to illustrative embodiments for particular applications, it should be understood that the disclosure is not limited thereto. Those having ordinary skill in the art and access to the teachings provided herein will recognize additional modifications, applications, embodiments, and substitution of equivalents all fall within the scope of the embodiments described herein. Accordingly, the embodiments are not to be considered as limited by the foregoing description.

Various non-limiting embodiments of the present disclosure will now be described to provide an overall understanding of the principles of the structure, function, and use of systems and methods disclosed herein for integrated data optimization for processing an electronic message. Conventional methods for handling electronic transactions and financial operations face technical challenges, including vulnerability to fraud, inefficiencies in transaction processing, and difficulties in managing real-time data. Traditional fraud detection systems often rely on static rule-based approaches that can result in high false positive rates and missed fraudulent activities. Similarly, the conventional authorization process may suffer from slow decision-making due to outdated algorithms or inadequate real-time data integration. Additionally, conventional methods may struggle with scalability issues, leading to performance bottlenecks and increased operational costs as transaction volume grows. These limitations may necessitate frequent manual intervention and compromise the overall security and efficiency of financial transactions.

Moreover, there are many factors to consider in handling an electronic message, such as fraud prevention, security, cost of transaction, and operational efficiency, and the interplay among these factors (e.g., fraud, security, cost, and efficiency) creates a complex landscape for systems processing electronic transactions. For example, while robust fraud detection measures may be desirable to mitigate significant financial losses and reputational damage, excessive security measures can lead to false positives, where legitimate transactions are flagged as suspicious, causing delays and customer dissatisfaction. Additionally, complex security measures can slow down transaction processing times, potentially resulting in lost sales and a poor user experience. The importance of these competing factors (e.g., fraud, security, cost, and efficiency) may vary depending on specific situations or tasks (e.g., fraud detection, chargeback management, refund optimization, authentication/authorization optimization, etc.). However, conventional methods often focus on one factor or apply a one-size-fits-all approach in handling an electronic message, failing to account for the varying significance of each factor in different contexts, and how one or more factors/decisions (e.g., fraud risk) may affect other factors/decisions (e.g., cost/rate).

Some aspects of the present disclosure may significantly advance beyond the drawback of conventional methods by integrating sophisticated machine learning algorithms, real-time analytics, and dynamic optimization techniques. For instance, considering various data and factors from one or more platforms (e.g., authorization optimization platform, fraud detection platform, chargeback detection platform, refund optimization platform, authentication optimization platform, PIN suppression platform, etc.), the machine-learning engine according to an aspect of the present disclosure may enable adaptive learning and predictive capabilities, reducing false positives and enhancing the accuracy of fraud decisions; ensure faster and more reliable transaction approvals by leveraging real-time data and predictive modeling; and/or employ advanced encryption and tokenization to protect sensitive information more effectively. The system according to an aspect of the present disclosure may use an integrated data optimization system including an intelligent orchestration module and machine learning engine (among other things) to coordinate and optimize multiple subsystems/modules/devices, improving overall system efficiency and scalability, thereby achieving the above-discussed goals. The system according to an aspect of the present disclosure may simulate processing a transaction multiple times by selecting various permutations and combinations of available options for that particular transaction. The simulation results are compared to determine the option selections that yield results that are closest to the client goals and inputs. In certain aspects of the present disclosure, the permutations and combinations of available options relate to various security and routing options for a financial transaction, such as authorization, fraud detection, chargeback, tokenization, refund optimization, authentication optimization, pin suppression, network selection, etc.

Aspects of the present disclosure may also provide embodiments that solve the technical shortcoming in the field of data processing and data routing, and which lead to significant technical improvements in the same field by performing multiple tasks based on data from various platforms (and a set of rules), thereby achieving successful authorization while reducing cost without increasing the likelihood of fraud. By determining the plurality of factors associated with the handling of an electronic message (e.g., the probability of a fraudulent electronic message, chargeback, latency in communication, and/or cost factors) at an earlier stage of the electronic message processing (based on pre-set rules generated based on a machine learning model trained, using a set of data from a plurality of electronic message processing platforms), the system according to aspects of the present disclosure may reduce the data processing and other network resources that would otherwise be applied to such electronic messages (e.g., transactions). Moreover, aspects of the present disclosure may enable the system to account for the interactions between various factors, thereby identifying an optimal path for processing an electronic message by considering the dynamic nature of these factors/decisions and how they influence each other.

Since the system according to aspects of the present disclosure may analyze the electronic message using various data and outcomes from various electronic message processing platforms (e.g., that are normally specialized in performing specific functions), the system according to aspects of the present disclosure can detect various issues with the electronic message (e.g., that might not have been detected if the electronic message is processed only using one of the specialized platforms), thereby identifying the issues more accurately and reducing the losses that might otherwise occur if the electronic message was processed using only one of the specialized platforms. For example, by assessing fraud or chargeback likelihood in the initial stages by using machine learning algorithm and data from various specialized platforms, the system according to aspects of the present disclosure can implement additional security measures to prevent potential disputes before they occur. The system according to aspects of the present disclosure may introduce an exhaustive, systematic, and sophisticated process for measuring fraud, chargeback, latency, and/or cost factors during electronic messaging, and incorporate such measures into the decision-making process.

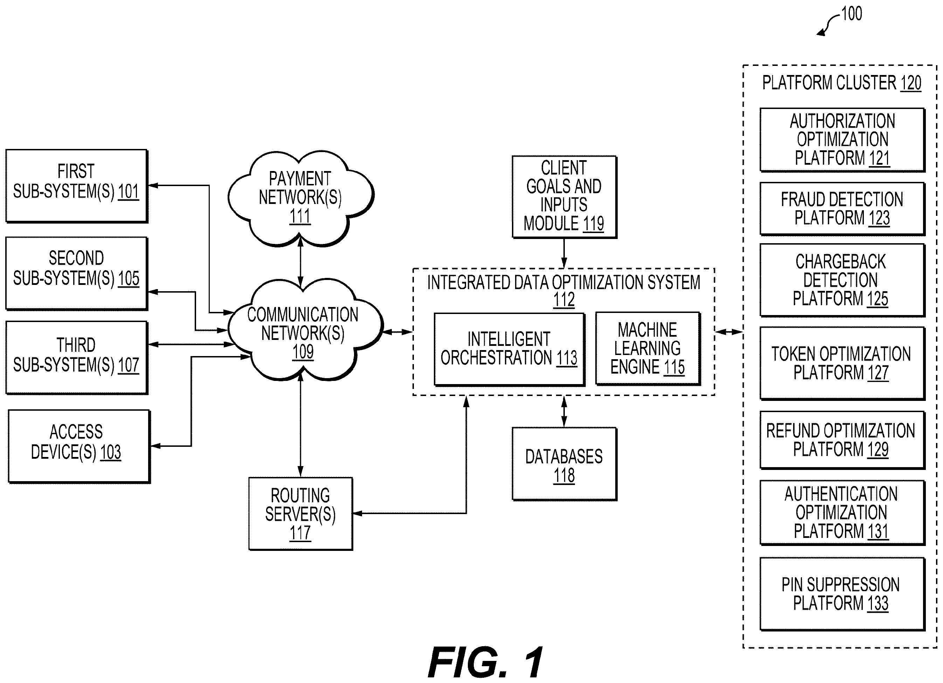

FIG. 1 is a diagram showing an example of a system 100 for integrated data optimization for processing an electronic message, for example, by determining a plurality of factors associated with the electronic message, according to aspects of the present disclosure. FIG. 1 includes the system 100 that includes a first sub-system 101, an access device 103, a second sub-system 105, a third sub-system 107, a communication network 109, a payment network 111, an integrated data optimization system 112, a routing server 117, databases 118, client goals and inputs module 119, and a platform cluster 120. In some embodiments, the system 100 may be a payment or transaction system.

In one embodiment, the first sub-system 101 may include any type of mobile terminal, wireless terminal, fixed terminal, or portable terminal utilized by merchant(s) to communicate with the other system(s) within the system 100. The first sub-system 101 may include, but is not restricted to, a point-of-sale (POS) device, an electronic cash register (ECR), a mobile handset, a wireless communication device, a station, a unit, a device, a multimedia computer (e.g., computer system 500), an Internet node, a communicator, a dashboard computer, a data server, or any combination thereof, including the accessories and peripherals of these devices, or any combination thereof. The first sub-system 101 may facilitate various input devices/functions/mechanisms/systems (e.g., a touch screen capability, a keyboard and keypad data entry, a voice-based input mechanism, etc.) and output devices/functions/mechanisms/systems (e.g., generating, sharing, and viewing of visual content) for hosting a merchant's e-commerce (or online) store. In one instance, the merchant(s) may include a brick-and-mortar retail location or an e-commerce/web-based merchant with a POS device or a web payment interface for rendering goods and/or services to the user(s).

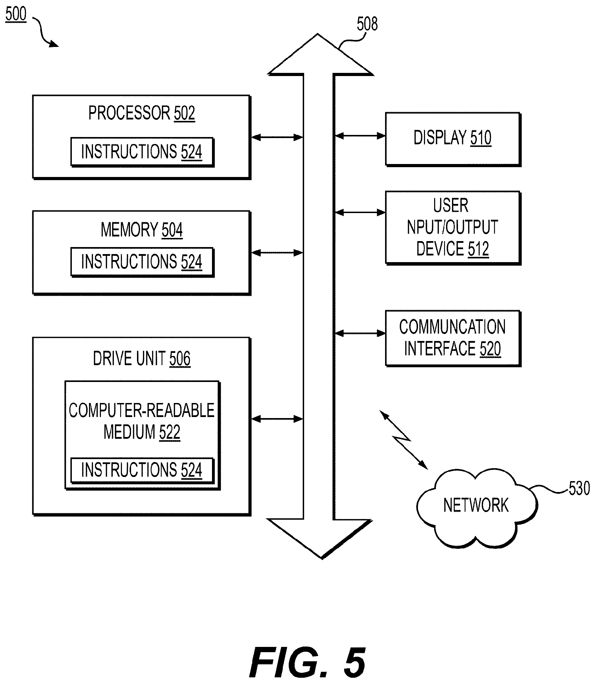

In one embodiment, the access device 103 may include any type of mobile terminal, wireless terminal, fixed terminal, or portable terminal utilized by user(s) (e.g., customers) for communicating with the other system(s) within the system 100. The access device 103 may include, but is not restricted to, a mobile handset (e.g., a mobile device storing access device information), a wireless communication device, a station, a unit, a device, a multimedia computer (e.g., computer system 500, discussed below with reference to FIG. 5), an Internet node, a communicator, a dashboard computer, a point of sale (POS) device, a data server, any tools or instrument (that may allow a user to initiate and authorize electronic financial transactions), or any combination thereof, including the accessories and peripherals of these devices, or any combination thereof. The access device 103 may provide various input devices/functions/mechanisms/systems (e.g., a touch screen capability, a keyboard and keypad data entry, a voice-based input mechanism, etc.) and output devices/functions/mechanisms/systems (e.g., generating, sharing, and viewing of visual content) for facilitating user(s) during an electronic messaging (e.g., online transaction) with the merchant(s). In one instance, the user(s) may be individuals, companies, or other entities having accounts with an issuer. The user(s) may have at least one access device associated with an account with the issuer. In one embodiment, the access device may include a debit card, a credit card, a gift card, a loyalty card, a bonus points card, a contactless payment device, a digital payment device, a digital wallet, etc. The access device may be used at any location, for example, brick-and-mortar stores, online e-commerce websites, e-commerce apps, etc., where the access device's sponsoring networks are accepted.

In one embodiment, the second sub-system 105 may include computing devices utilized by the acquirer(s) to send, receive, and process data relating to an electronic message (e.g., online transaction). The computing devices of the second sub-system 105 (e.g., acquirer sub-system) may perform computations and logic operations without human intervention. In one instance, the computing device may consist of a standalone unit or several interconnected units to provide a specific set of functions or more general functions such as a desktop computer. In one instance, the acquirer(s) may be entities that utilize the second sub-system 105 to route an electronic message including the value (e.g., the amount for an online transaction) from an issuer to the account of the merchant(s) to complete the electronic message. The acquirer(s) may utilize the second sub-system 105 to provide a variety of electronic payment processing services to the merchant(s). For example, the acquirer(s) may receive an electronic message including the value that occurs at a POS terminal associated with the merchant(s). The acquirer(s) may process the information and send the information to the consumer's respective financial institution via an appropriate payment network 111 depending on the particulars of the access device.

In one embodiment, the third sub-system 107 may include computing devices utilized by the issuer(s) to provide financial services to the user(s). The computing devices of the third sub-system 107 may perform computations and logic operations without human intervention. In one instance, the computing device may consist of a standalone unit or several interconnected units to provide a specific set of functions or more general functions such as a desktop computer. In one instance, the issuer(s) may include entities (e.g., banks, credit union, or other financial institutions) that manage payment accounts on behalf of user(s) (e.g., customer(s)). For example, the issuer(s) may hold accounts for the user(s), and the user(s) may have an access device (e.g., debit cards, credit cards, etc.) affiliated with that account. The issuer may represent the user(s) in an electronic message.

In one example embodiment, the issuer(s), via the third sub-system 107, may issue an access device to the user(s). The user(s), via the access device 103, may utilize the access device during electronic messaging to purchase a service offered by the merchant(s). This may trigger an authentication flow, and the merchant(s), via the first sub-system 101, may communicate with the acquirer(s) to receive the electronic message including the value for the services rendered to the user(s). The acquirer(s), via the second sub-system 105, may communicate with the issuer(s) through a network of switches, gateways, and servers that are monitored, in real-time or near real-time, for example, by the integrated data optimization system 112 and/or one or more platforms of the platform cluster 120.

In one embodiment, various elements of the system 100 may communicate with each other through the communication network 109. The communication network 109 may support a variety of different communication protocols and communication techniques. In one embodiment, the communication network 109 may allow the first sub-system 101, the access device 103, the second sub-system 105 (e.g., acquirer sub-system), and the third sub-system 107 (e.g., the issuer sub-system), to communicate with the integrated data optimization system 112 and/or one or more platforms of the platform cluster 120. The communication network 109 of the system 100 may include one or more networks such as a data network, a wireless network, a telephony network, or any combination thereof. It is contemplated that the data network is any local area network (LAN), metropolitan area network (MAN), wide area network (WAN), a public data network (e.g., the Internet), short range wireless network, or any other suitable packet-switched network, such as a commercially owned, proprietary packet-switched network, e.g., a proprietary cable or fiber-optic network, and the like, or any combination thereof. In addition, the wireless network is, for example, a cellular communication network and employs various technologies including 5G (5th Generation), 4G, 3G, 2G, Long Term Evolution (LTE), wireless fidelity (Wi-Fi), Bluetooth®, Internet Protocol (IP) data casting, satellite, mobile ad-hoc network (MANET), vehicle controller area network (CAN bus), and the like, or any combination thereof.

In one embodiment, the system 100 may also include one or more payment networks 111. The payment network 111 may facilitate the transfer of messages that determine the value of the funds between (financial) institutions involved in the electronic message (e.g., transaction), specifically between the second sub-system(s) 105 (e.g., acquirer sub-system) and the third sub-system(s) 107 (e.g., the issuer sub-system). For example, the first sub-system(s) 101 may choose various second sub-systems 105 to process the electronic messages through the various payment networks 111 used by the access devices 103. In some examples, the fund settlement may occur over the payment network 111 or via another network with various issuers. The payment networks 111 may include credit networks (e.g., Visa, Master Card, Discover, American Express, etc.) and/or debit networks (e.g., Star, Plus, Jeanie, Pulse, etc.). The third sub-systems 107 may decide which groups and types of networks to accept, and the first sub-systems 101 may further determine through which processors and networks to route electronic messages.

PLATFORM CLUSTER

In some embodiments, the system 100 may include a platform cluster 120 having one or more platforms. For example, the platform cluster 120 may include an authorization optimization platform 121, fraud detection platform 123, chargeback detection platform 125, token optimization platform 127, refund optimization platform 129, authentication optimization platform 131, and/or PIN suppression platform 133. In some examples, each of these platforms may include database dedicated to the corresponding platform. In other examples one or more central databases are shared, accessed, and/or operated by these platforms. In some examples, the one or more platforms in the platform cluster 120 may operate as microservices or applications. Each of these platforms will be discussed in more detail below.

In some embodiments, the integrated data optimization system 112 may receive a request from the first sub-system 101 for an electronic message (e.g., online transaction) associated with an access device (e.g., access device 103). Then, the integrated data optimization system 112 may utilize one or more platforms of the platform cluster 120 to process the electronic message.

In one instance, electronic messages may be online transactions (card transaction, payment transaction, etc.) for adding/removing funds from an account for a service. In some embodiments, the electronic message may be a single message transaction (e.g., PIN debit card transactions) or a dual message transaction (e.g., a credit card transaction, a signature-based debit card transaction). In some embodiments, the electronic message may be a card present transaction or a card-not-present transaction or any other transaction type.

AUTHORIZATION OPTIMIZATION PLATFORM

In one embodiment, the authorization optimization platform 121 may be a platform with multiple interconnected components. The authorization optimization platform 121 may include one or more servers, intelligent networking devices, computing devices, components, and corresponding software for determining network pairings and plurality of factors associated with the network pairings for secure and efficient routing of electronic message(s). The authorization optimization platform 121 may receive a request from the integrated data optimization system 112 for processing an electronic message (e.g., online transaction) associated with an access device of the access device 103. The authorization optimization platform 121 may determine network pairings between a plurality of networks associated with the access device (e.g., access device issuing networks such as Visa®, Mastercard®, Discover®, American Express®, global signature debit networks, etc.) and a plurality of regional networks (e.g., personal identification number (PIN) regional networks, or any other regional networks), for authenticating the request for the electronic message. Each network may have its own set of authentication protocols and security measures. By establishing pairings between different networks, the authorization optimization platform 121 can leverage diverse authentication protocols, adding layers of security to the transaction process.

The authorization optimization platform 121 may process past data, which may be stored in a database (e.g., database 207), associated with each of the network pairings to determine a plurality of factors (e.g., the probability of an approval of the electronic message, the probability of a chargeback, the probability of fraud, the value of the electronic message, the latency in communicating the electronic message within a network system, and/or the preference information of the access device 103) for routing the electronic message. By systematically evaluating these parameters, the authorization optimization platform 121 may intelligently select the most optimal network for processing. The authorization optimization platform 121 may route the request to at least one of the plurality of networks associated with the access device or at least one of the plurality of regional networks based on the plurality of factors. This dynamic selection may ensure that the transaction authentication process is optimized through the most efficient network route, reducing latency and facilitating quicker response.

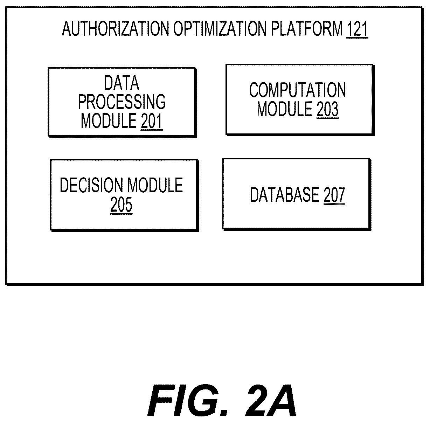

Referring to Fig. 2A, in one embodiment, the authorization optimization platform 121 may include a data processing module 201, a computation module 203, a decision module 205, a database 207, and/or any combination thereof. As used herein, terms such as "component" or "module" generally encompass hardware and/or software, e.g., a processor, thread, algorithm, or the like used to implement associated functionality. It is contemplated that the functions of these components are combined in one or more components or performed by other components of equivalent functionality.

In one embodiment, the data processing module 201 may collect, in real-time or near real-time, relevant data associated with the electronic messages (e.g., online transactions), user(s) (e.g., customers), and/or merchant(s), through various data collection techniques. The data may be stored in a database (e.g., database 207). The data processing module 201 may include various software applications (e.g., data mining applications in Extended Meta Language (XML)) that automatically search for and return relevant data. For example, the data processing module 201 may use a web-crawling component to access various data sources to collect relevant data pertaining to the electronic messages and/or the users, so that risk identification, analysis, routing, and monitoring are performed using the most recent data.

In one instance, the relevant data associated with the users may include transaction data (e.g., transaction history, past fraudulent transactions, etc.), financial data (e.g., past financial information, credit reports, chargeback data, etc.), preference data, and/or personal data. In one instance, the relevant data associated with the merchants may include transaction volume, financial data, chargeback statistics, and/or service type. In one instance, the relevant data associated with the electronic messages may include latency data and/or transaction metadata (e.g., timestamps, transaction identifiers, geolocation).

In one embodiment, the data processing module 201 may perform data standardization (e.g., standardizing and unifying data) and/or data cleansing on the collected data. For example, data standardization may include converting the collected data into a common format (e.g., machine readable form) that is easily processed by other modules and platforms. For example, data cleansing may include removing or correcting erroneous data by cross-checking the data with a validated data set or validating and correcting values against a known list of entities.

In one embodiment, the computation module 203 may calculate the probability of approval of the electronic message based on the approval rate of past electronic messages by the network pairings between a first network (e.g., global signature networks) and a second network (e.g., regional networks) within a plurality of payment segments (e.g., bank identification number (BIN), transaction type, sales amount, merchant category code (mcc), merchant type, time of day, day of week, etc.). In one embodiment, the computation module 203 may calculate expected benefits to the first sub-system 101 (e.g., merchant(s)) based on a difference between each of the network pairings regarding the probability of the approval of the electronic message and the value of the electronic message (e.g., transaction cost). In one embodiment, the computation module 203 may calculate a differential value (e.g., differential cost) for authorizing and settling the electronic message between each of the network pairings based on one or more fees (e.g., interchange fees, switch fees, ancillary fees, or any other fees). In one embodiment, the computation module 203 may calculate the probability of the chargeback based on the number of electronic messages submitted for chargeback and the total number of electronic messages within the payment segments. In one embodiment, the computation module 203 may calculate an expected value of the fraud based on the probability of the chargeback, an expected/predicted cost of the chargeback, and/or a value of the electronic message within the payment segments. The computation module 203 may transmit the differential value, expected value, and expected benefits to the decision module 205.

In one embodiment, the decision module 205 may pair the first network (e.g., networks associated with the access device) and the second network (e.g., regional networks) for authenticating the request for an electronic message. In one instance, the decision module 205 may pair the first network and the second network based on pre-configured rules, attributes of the electronic message (e.g., cost of the online transaction, transaction type, merchant type, etc.), or preference information of the participants (e.g., least cost routing, most secure routing, etc.).

In one embodiment, the first network may be card networks (e.g., Visa®, Mastercard®, Discover®, American Express®, etc.) that authorizes the resources (e.g., funds, money) to travel from the account of the access device 103 to the account of the first sub-system 101. In one embodiment, the second network may be regional PIN debit networks (e.g., Pulse®, Star®, NYCE®, Interlink®, Maestro®, etc.).

In one embodiment, the decision module 205 may compare within each of the plurality of payment segments the differential value of the electronic message between the network pairings, the expected value of fraud, and the expected benefit. The decision module 205 may recommend a route switch between the first network or the second network of the network pairings.

In one instance, the first network may serve as a standardized infrastructure that connects various financial institutions, merchants, and payment processors. Routing electronic messages through the first network may provide global reach and interoperability, allowing transactions to be processed across various financial institutions and merchants worldwide. This global connectivity may enhance the accessibility and convenience for users engaging in cross-border transactions. Additionally, the first network may implement robust security measures and fraud detection systems contributing to a secure payment environment.

In one instance, routing electronic messages through the second network may provide reduced latency, as local networks generally have faster and more direct communication between entities involved in the transactions. This may lead to quicker transaction times and improved overall system responsiveness. Additionally, the second network can enhance cost efficiency, as local data transmission often incurs lower fees. Improved security may be another benefit, as local networks can implement region-specific security measures and compliance standards, contributing to a more tailored and robust defense mechanism.

In some embodiments, the authorization optimization platform 121 may receive, via data processing module 201, a request (e.g., an authentication request) from the integrated data optimization system 112 for an electronic message (e.g., online transaction), which may be received from the first sub-system 101 (e.g., a device associated with a merchant) and associated with an access device (e.g., credit card, debit card, etc.) of the access device 103 (e.g., a device associated with a consumer). In one instance, the electronic message may be a special electronic message (as an example of a CNP transaction) based on an identifier included in the electronic message. An identifier may be a character, a symbol, an item, a number, or a sequence thereof that identifies the electronic message as the CNP transaction (e.g., remote transactions made without swiping, inserting, or tapping the access device on a payment terminal of the first sub-system 101). In one example embodiment, the first sub-system 101 may receive access device information from the access device 103 during an electronic messaging for goods or services offered by the first sub-system 101. The first sub-system 101 may transmit the electronic message with an authentication request to the second sub-system 105 (e.g., devices utilized by the acquirers). The second sub-system 105 may transmit the electronic message and the authentication request to the authorization optimization platform 121 for further processing.

Then, the authorization optimization platform 121 may determine, via decision module 205, network pairings between first network (e.g., networks sponsoring the access devices, global signature debit networks) and a plurality of regional networks (e.g., PIN regional networks) for authenticating the request for the electronic message. In one instance, the network pairing may include associating the plurality of networks (e.g., the first network, the second network) to facilitate electronic message. For example, the authorization optimization platform 121 may pair Visa®, Mastercard®, or AmericanExpress® versus a regional network (Pulse®, Star®, NYCE®, Interlink®, Maestro®). In one instance, such pairings may be based on pre-configured rules, attributes of the electronic message (e.g., value of the online transaction, transaction type, merchant type, associated fees, etc.), or preference information of the participants (e.g., least cost routing, most secure routing, etc.). By pairing these networks, the authorization optimization platform 121 can assess factors like transaction approval probability, chargeback likelihood, fraud probability, transaction value, and network latency to dynamically select the most optimal network for processing electronic messages.

The authorization optimization platform 121 may process, via computation module 203, past data associated with the network pairings to determine a plurality of factors for routing the electronic message. In one instance, the plurality of factors may include one or more of a probability of approval of the electronic message, a probability of a chargeback, a probability of fraud, a value of the electronic message, a latency in communicating the electronic message within a network system, and/or preference information of the access device 103 (e.g., consumers). In one embodiment, the authorization optimization platform 121 may determine, via computation module 203, the probability of the approval of the electronic message based on approval rates of past electronic messages by the network pairings within the payment segments. In one instance, the payment segments may include identification data (e.g., BIN), electronic message type, total value of the electronic message (e.g., sales amount), category code data (e.g., MCC), and/or temporal information (e.g., time of the online transaction). In one instance, the approval rate of the electronic messages may be based on the number of approved electronic messages and the total number of electronic messages. For example:

$$Approval\ Rate = \frac{Number\ of\ Approved\ Electronic\ Message}{Total\ number\ of\ Electronic\ Message}$$

In one instance, selecting a network based on approval rate may benefit the transaction routing by optimizing for successful transaction authorizations, reducing the likelihood of declines, enhancing overall transaction efficiency, and ensuring a smoother payment process for the users.

In one embodiment, the authorization optimization platform 121 may measure, via computation module 203, an expected benefit to the first sub-system 101 (e.g., merchant(s)) based on a difference between each of the network pairings (e.g., Visa®, Mastercard®, or AmericanExpress® versus a regional network (Pulse®, Star®, NYCE®, Interlink®, Maestro®)) regarding the probability of the approval of the electronic message and the value of the electronic message. For example:

$$Difference\ between\ each\ of\ the\ network\ pairings$$
$$= approval\ of\ the\ electronic\ message$$
$$* the\ value\ of\ the\ electronic\ message$$

In one instance, routing of electronic messages by prioritizing networks that not only have a high likelihood of approval but also high-cost electronic message may lead to improved resource utilization, revenue potential, and efficiency.

In one embodiment, the authorization optimization platform 121 may measure, via computation module 203, a differential value (e.g., differential cost) for authorizing and settling the electronic message between each of the network pairings (e.g., Visa®, Mastercard®, or AmericanExpress® versus a regional network (Pulse®, Star®, NYCE®, Interlink®, Maestro®)) based on one or more fees. In one instance, the one or more fees may include interchange fees, switch fees, and ancillary fees. In one instance, optimizing routing of electronic messages based on differential value may lead to cost-effectiveness, as different networks may have varying processing fees or interchange rates, enabling the system to choose the most economical route for a specific electronic message.

In one embodiment, the authorization optimization platform 121 may measure, via computation module 203, the probability of the chargeback based on a number of electronic messages submitted for the chargeback and the total number of electronic messages within the payment segments (e.g., identification data, electronic message type, total value of the electronic message, category code data, and/or temporal information). For example:

$$Probability\ of\ Chargeback = \frac{Number\ of\ Electronic\ Message\ Chargedback}{Total\ number\ of\ Electronic\ Message}$$

In one instance, routing electronic messages based on chargeback rates may minimize the risk of post-transaction disputes, enhances overall transaction security, and mitigates potential financial losses associated with chargeback fees and disputed transactions.

In one embodiment, the authorization optimization platform 121 may measure, via computation module 203, an expected value of fraud (e.g., expected expenses for fraud) based on a probability of the chargeback, a cost of the chargeback, and/or a value of the electronic message within the payment segments (e.g., identification data, electronic message type, total value of the electronic message, category code data, and/or temporal information). For example:

$$Expected\ expenses\ for\ Fraud = \text{Cost of Chargeback} +$$

$$(\text{Value of the special electronic message} *$$

$$\text{Probability of the chargeback within payment segments})$$

In one instance, by considering the expected expenses for fraud, the system can route electronic messages through networks with lower expected fraud expenses and minimal financial risks, thereby enhancing the overall security of the electronic messages.

The authorization optimization platform 121 may route, via decision module 205, the request to at least one of the first network or at least one of the second network based on the above determined plurality of factors. For example, the authorization optimization platform 121 may compare, via decision module 205, within each of the payment segments the differential value of the electronic message between the network pairings, the expected value of fraud, and the expected benefit to the first sub-system 101. Such a comparison may be performed due to the differences in the probability of approval between the same or different network pairs. The authorization optimization platform 121 may determine within each of the payment segments at least one of the first network or at least one of the second network has a greater expected benefit than a transaction cost. The authorization optimization platform 121 may recommend a route switch between the first network or the second network (e.g., route the electronic message from a negative to a positive route).

In one instance, the authorization optimization platform 121 may switch an electronic message with higher value (e.g., online transaction with cost above a threshold level) to the first network (e.g., global signature networks) for secure authentication. In one instance, the authorization optimization platform 121 may switch a specific electronic message type (e.g., an online transaction for a specific type of service or with a specific merchant) to at least one of the first network or the second network based on the approval rate of similar types of electronic messages for efficient processing. In one instance, the authorization optimization platform 121 may switch an electronic message with a higher chargeback probability to at least one of the first network or the second network based on past chargeback processing data. In one instance, the authorization optimization platform 121 may determine higher network traffic and switch an electronic message to another network randomly or per a pre-determined configuration to reduce latency in communication. In one instance, the authorization optimization platform 121 may determine a risk factor (e.g., fraud) for an electronic message is above a threshold level, and switch an electronic message to a secure network (e.g., the first network) for secure processing. In one instance, the authorization optimization platform 121 may determine user preferences (e.g., lower cost) and switch an electronic message to another network (e.g., second network) to reduce processing cost. Such network change reduces incorrect and unnecessary payment declines (e.g., false positives), reduces network traffic, improves network security, and improves user experience at a cost that is acceptable to the merchant(s).

In one embodiment, the authorization optimization platform 121 may assess the plurality of factors (e.g., approval rate, network cost, the difference between each network pairing, probability of chargeback, and expected expenses for fraud) and assign weights based on their significance. In one example, if the cost associated with a network is deemed to be more important than other factors, it is assigned a higher weight. The authorization optimization platform 121 may calculate a weighted value that reflects the overall risks and expenses associated with each network pairing. The decision to choose an optimal network may be then based on these calculated weighted values, ensuring a comprehensive and data-driven approach to transaction routing that balances cost, risk of fraud, and authorization probability. Examples of the components and operations of an authorization optimization platform are described in U.S. Patent Application No. 18/635,245, titled SYSTEMS AND METHODS FOR ROUTING AN ELECTRONIC MESSAGE IN SYSTEM NETWORK, filed April 15, 2024, the disclosure of which is hereby incorporated by reference in its entirety.

FRAUD DETECTION PLATFORM

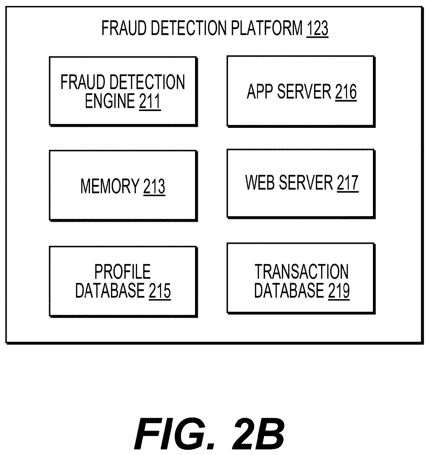

Referring to FIG. 2B, the fraud detection platform 123 may include a fraud detection engine 211, memory 213, profile database 215, application server 216, web server 217, and transaction database 219. The profile database 215 for an individual may further include a unique identifier hash recognizing the profile of an individual, primary account numbers (e.g., PANs) or other identifiers of payment vehicles (e.g. debit, credit cards) associated with the individual, any known device(s) used by or associated with the individual, personally identifiable information (PII), and/or data/analysis of an individual's spending habits, geographic area, and fraud activities reported on the cards or devices associated with the individual. In an example embodiment, the personally identifiable information (PII) about the individual involves at least one of his/her name, email address, date of birth, social security number, and physical address. In some embodiments, personally identifiable information may also extend to biometric information about the individual (e.g., eye or retina scan, fingerprint, eye color, hair color, etc.)

In the above embodiment, the fraud detection platform 123 may further include transaction database 219. The transaction database 219 may include important transaction data associated with the payment vehicles. The transaction database may include tables containing source ID, terminal ID, date and time, IP address, location, and transaction amount for the transactions associated with payment vehicles, and devices used by or associated with the individual (e.g., access device(s) 103). In some embodiments, one or more platforms in the platform cluster 120 may have access to the transaction database 219.

In some embodiments, the fraud detection platform 123 may be used for a household, which may involve multiple related individuals using multiple payment vehicles (e.g., access devices 103). The profile database 215 for a household may further include a unique identifier hash identifying a household, unique IDs associated with each member of the household, payment vehicles (e.g. debit, credit cards) associated with each member of the household, devices associated with or used by the various individuals of the household, PII associated with each member of the household, and data/analysis of spending habits, geographic area, and reported fraud activities on the cards associated with each member of the household. In an example embodiment, the PII of each member of the household involves at least one of the member's name, email address, date of birth, and physical address. In some embodiments, the PII may extend to each member's biometric information.

When the first sub-system 101 sends (or the second sub-system 105 receives) an authorization request for an online or brick-and-mortar transaction over a network, such an authorization request may be intercepted by or otherwise received by the integrated data optimization system 112. Then, the integrated data optimization system 112 may send a request to fraud detection engine 211 of fraud detection platform 123 for processing the electronic message. In an example embodiment, the transaction may be for purchase of an item or a service, or for a withdrawal of cash. The fraud detection engine 211 may retrieve identifying information associated with the transaction and transaction data from the authorization request before the authorization request is routed to a financial institution. The identifying information may include, for example, personally identifiable information (PII) of an individual associated with the transaction, a device fingerprint, device-specific information, an originating IP address, which may be determined through IP proxy piercing, etc. In some embodiments, the fraud detection platform may receive information pertaining to the device used in the payment transaction leading to the authorization request ("device information"). The device information may be received, for example, from the merchant (e.g., an e-commerce site or server used by or belonging to the merchant) or from an acquiring financial institution. Furthermore, the fraud detection platform may receive information pertaining to the payment vehicle (e.g., credit card, debit card, loyalty or rewards card, etc.) used in the payment transaction leading to the authorization request ("payment vehicle information" or "first payment vehicle information"). In some embodiments, the payment vehicle information for the payment vehicle used in the transaction may be a part of the authorization request and may be sent by merchant or acquirer, e.g., based on the payment vehicle information (e.g., PAN) provided by the consumer at a merchant ecommerce site or POS. In some embodiments, the payment vehicle information initially received from the merchant or acquirer may just be an identifier (e.g., PAN) of a payment vehicle. In such embodiments, the fraud detection platform may use that identifier to retrieve further or more thorough payment vehicle information (e.g., of the payment vehicle used in the transaction) from an issuer or financial institution of the payment vehicle.

Then, the fraud detection engine 211 may search a profile database 215 for a fraud detection profile associated with the identifying information associated with the transaction. If the fraud detection engine 211 finds a profile associated with the identifying information associated with the transaction in profile database 215, the acquirer processor may further analyze the transaction against the profile to determine whether the online or in-store transaction is fraudulent. If the fraud detection engine 211 determines that the transaction is fraudulent, then the acquirer processor may further send a notification to the web server 217 along with the authorization request, which is sent to a financial institution. The financial institution may, based on the fraud message, decline the transaction according to the notification provided by the fraud detection engine 211. The transaction data may include at least one of a merchant's ID, transaction location, terminal information, source IP address, date and time of the transaction, device information, transaction amount of the purchase, and payment vehicle information.

In another embodiment, if the fraud detection engine 211 does not find a profile within the profile database 215, the fraud detection engine 211 may store the transaction in a transaction database 219. The fraud detection engine 211 may further search for any additional payment vehicles associated with the retrieved identifying information associated with the transaction from the transaction database 219. Furthermore, the fraud detection engine 211 may further search for any additional devices associated with the retrieved identifying information associated with the transaction from the transaction database 219. The fraud detection engine 211 may aggregate transaction data associated with payment vehicle(s) and device(s) from the transaction database 219. The fraud detection engine 211 may retrieve any reported fraudulent activities from at least one financial institution, e.g., associated with the payment vehicle(s) and/or device(s).

The fraud detection engine 211 may generate a profile for an individual according to the retrieved identifying information associated with the transaction, aggregated transaction data from the payment vehicle(s) and/or device(s), and reported fraudulent activities from at least one financial institution. The fraud detection engine 211 may also generate a unique hash value for the generated profile data for the individual (e.g., access device 103). Once the profile data for the individual is generated, the fraud detection engine 211 may analyze the online or brick-and-mortar transaction against the generated profile according to operation 340, and further determine whether the transaction is fraudulent.

In the above-illustrated embodiment, the fraud detection engine 211 may notify the financial institution associated with the transaction if it determines the transaction to be fraudulent. The fraud detection engine 211 may attach the notification to the authorization request before sending the authorization request to the web server 217 communicating with the financial institution. In another embodiment, the fraud detection engine 211 may attach the fraudulent activity analysis to the authorization request before sending the request to the financial institution.

In an exemplary embodiment, the authorization request may be presented with the fraudulent activity analysis report at the graphical user interface associated with the web server 217. In another embodiment, the fraud detection engine 211 may determine whether to decline or approve the transaction without involving the financial institution.

The method of establishing the fraud detection platform disclosed herein may provide a multidimensional score for one in-store or online transactions for presentation to and use by a variety of different merchants and issuers. For example, the multidimensional fraud score may determine and communicate the likelihood of the transaction being fraudulent according to the analysis of the transaction.

In one embodiment, the individual profile data are at least one of the individual's spending irregularities and analysis of reported fraudulent activity associated with the payment vehicles and device(s) linked to the individual. The spending irregularities of the individual are computed according to the individual's spending habits, geographic area, and type of payment vehicles and device(s) used for those payments. Additionally, the personally identifiable information (PII) may include at least one of a name, physical address, email address, etc. of the individual, wherein the payment vehicles (e.g., access device(s) 103) may be debit, loyalty, or credit cards, issued by at least one financial institution or merchant. In the exemplary embodiment, the microprocessor-enabled payment vehicles may be payment vehicles using computer chips to authenticate transactions according to Europay, MasterCard, and Visa (EMV) global standard. The contactless payment vehicles may be, for example, EMV or NFC compatible payment vehicles. Examples of the components and operations of a fraud detection platform are described in U.S. Patent No. 11,107,083, titled SYSTEMS AND METHODS FOR AGGREGATED DATABASE FOR CROSS-ISSUER FRAUD DETECTION SYSTEM, filed November 29, 2017, U.S. Patent No. 11,488,170, titled SYSTEMS AND METHODS FOR AUTOMATED FRAUD DETECTION AND ANALYTICS USING AGGREGATED PAYMENT VEHICLES AND DEVICES, filed March 19, 2018, and U.S. Patent Application No. 16/781,321, titled SYSTEMS AND METHODS FOR FRAUD PREVENTION IN ELECTRONIC TRANSACTIONS BY IDENTIFYING AND LINKING TRANSACTIONS BY UNIQUE IDENTIFIERS, filed February 4, 2020, the entire contents of each of which are incorporated by reference herein.

CHARGEBACK DETECTION PLATFORM

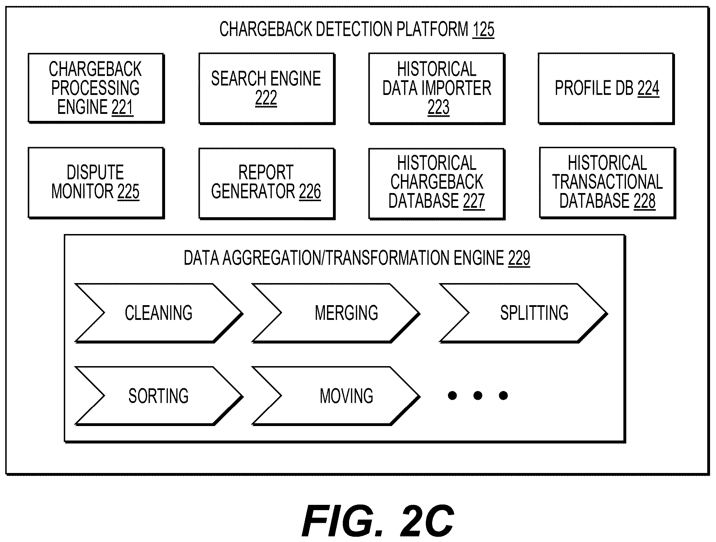

Referring to FIG. 2C, the second sub-system 105 (e.g., acquirer processor) may communicate with the integrated data optimization system 112, which may communicate with a chargeback detection platform 125 that may include a chargeback processing engine 221, profile database 224, historical transactional database 228, and historical chargeback database 227 from the third sub-system(s) 107 (e.g., the issuer sub-system). The profile database 224 for an individual (e.g., access device(s) 103) may include a unique identifier hash recognizing the profile associated with the individual's payment vehicles (e.g., debit, credit cards), personally identifiable information (PII), identifying information of transactions associated with the individual, and analysis of an individual's spending habits, geographic area, fraud activities reported on the cards associated with the individual. In an example embodiment, the personally identifiable information (PII) about the individual may include at least one of his/her name, email address, date of birth, social security number, and physical address. The historical transactional database 228 may include transaction data associated with the access device 103 (e.g., payment vehicle). The transactional database 228 may include tables containing information associated with one or more transaction(s), such as, for example, a source ID, a terminal ID, a date and time of the transaction, an IP address, a location of the transaction, and a transaction amount. In an example embodiment, historical chargeback database 227 may include chargeback history associated with the individual from one or more issuer(s) (e.g., third sub-systems 107).

In some embodiments, the chargeback detection platform 125 may receive one or more chargeback(s) analysis requests from the integrated data optimization system 112, for example, when the integrated data optimization system 112 receives one or more chargeback(s) analysis requests from one or more third sub-systems 107 (e.g., one or more issuers). The chargeback detection platform 125 may further include a search engine 222, report generator 226, historical data importer 223, dispute monitor 225, and data aggregation/transformation engine 229.

In an example embodiment, the third sub-system(s) 107 (e.g., issuer(s)) may submit chargeback fraud analysis request using a web application over a computer network (e.g., network 109). In an example embodiment, the third sub-system(s) 107 may use an Application Programming Interface (API) and Hypertext Transfer Protocol (HTTP). The third sub-system(s) 107 may use HTTP CRUD (Create, Read, Update, Delete) operations to send the fraud analysis request to the chargeback processing engine 221.

In the above-illustrated embodiment, the chargeback processing engine 221 may extract at least one of identifying information of transactions associated with the access device 103 (e.g., an individual/customer), Personally Identifiable Information (PII) and a unique account identification from the fraud analysis request submitted by the third sub-system(s) 107 (e.g., issuers). The chargeback processing engine 221 may query the search engine 222 (e.g., processor) to retrieve a fraud analysis profile associated with the identifying information, PII or the unique account identification. The search engine 222 may search for the fraud analysis profile in a profile database 224.

In an example embodiment, search engine 222 may find the fraud analysis profile for the queried chargeback(s) analysis request. The search engine 222 may further determine whether the fraud analysis profile is generated within a specific time period (e.g., date and time) provided by the chargeback processing engine 221. The search engine 222 may deliver the fraud analysis profile to the chargeback processing engine 221 if the fraud analysis profile is generated within the specific time period.

The chargeback processing engine 221 may analyze the chargeback against the fraud analysis profile. The fraud analysis profile may include spending irregularities or suspicious activities associated with the unique account identification or the individual. The chargeback processing engine 221 may analyze the chargeback(s) against spending irregularities or suspicious activities provided in the fraud analysis profile. The chargeback processing engine 221 may determine a multidimensional score for the chargeback(s) according to the analysis of chargeback(s) against the fraud analysis profile. The chargeback processing engine 221 may present the analysis and multidimensional score to the integrated data optimization system 112, which may then present it to the third sub-system 107 (e.g., requester issuer) using a web interface over a computer network.

In an alternative embodiment, the chargeback processing engine 221 may utilize report generator 226 to analyze the chargeback against the fraud analysis profile and generate a report to be sent to the requesting issuer(s). The report could be sent to one or more issuer(s) using, for example, an API or email address of an agent requesting the issuer(s) chargeback analysis. Report generator 226 may be a cloud platform performing the analysis using HTTP protocol.

In an alternative embodiment, the third sub-systems 107 (e.g., issuers) may configure, through the integrated data optimization system 112, the chargeback processing engine 221 to retrieve fraud analysis profile for chargeback(s) within a specific range of values of goods and services. In a yet another embodiment, the chargeback processing engine 221 may provide fraud alert parameters for future transactions to issuer(s). The fraud alert parameters may be at least one of geographical restrictions, merchant restrictions, purchase price restrictions, etc.

In an example embodiment, report generator 226 may be a cloud platform (e.g., Web Service), where the report generator 226 may communicate with the chargeback processing engine 221 using a Representational State Transfer (REST) Application Programming Interface (API). In an example embodiment, the dispute monitor 225 may be responsible for tracking the fraud analysis request and generating analysis report. The dispute monitor 225 may make calls to an API published by report generator 226 to track progress of analysis report generation and fraud analysis profile generation.

In an alternative embodiment, if the fraud analysis profile is not available for the requested chargeback analysis, search engine 222 may send a message to chargeback processing engine 221. The chargeback processing engine 221 may generate a unique hash and a fraud analysis profile request. The chargeback processing engine 221 may send the fraud analysis profile request including the unique hash to historical data importer 223 to generate fraud analysis profile for received identifying information of transactions associated with the individual , PII, or unique account identification. The historical data importer 223 may further import historical chargeback disputes from one or more issuer(s) associated with at least one of the identifying information of transactions associated with the individual, PII, and unique account identification. The historical data importer 223 may further import historical transactions from historical transactional database 228. The historical transactional database 228 may include historical transactions from one or more third sub-systems (e.g., issuers). The historical transactions may be retrieved from payment networks 111, when transaction authorization requests are sent for a payment transaction from an online or brick-and-mortar merchant (e.g., first sub-system 101) from point of sale terminal to financial institutions (e.g., third sub-systems 107). Transaction information for historical transactions may be retrieved before the authorization requests are routed to the financial institutions (e.g., third sub-systems 107).

The historical data importer 223 may send the retrieved historical chargeback data and historical transaction data along with a fraud analysis profile request to a data aggregation/transformation engine 229. The main tasks of data aggregation/transformation engine 229 may include data extraction, transformation, and loading into a temporary storage system. The data aggregation/transformation engine (e.g., processor) 229 may perform further operations such as data moving, cleaning, splitting, translation, merging, and sorting. The data aggregation/transformation engine 229 may store the transformed data in standard format such as, for example, in a relational database or a distributed file system. Examples of the components and operations of a chargeback detection platform are described in U.S. Patent Application No. 15/825,255, titled SYSTEMS AND METHODS FOR CROSS-ISSUER CHARGEBACK FRAUD DETECTION SYSTEM, filed November 29, 2017, the disclosure of which is hereby incorporated by reference in its entirety.

TOKEN OPTIMIZATION PLATFORM

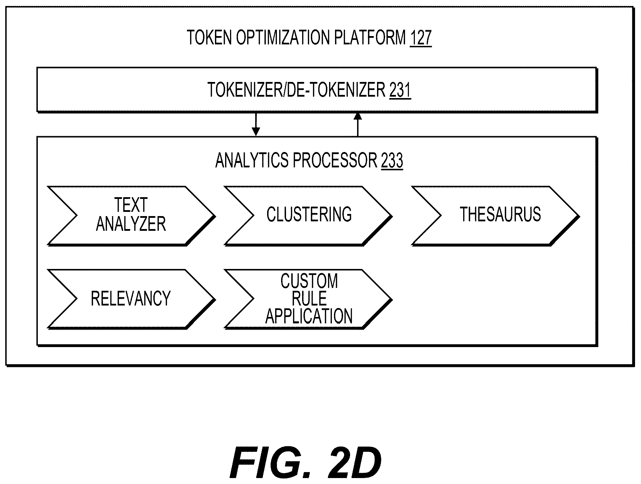

Referring to Fig. 2D, the token optimization platform 127 may be utilized with the chargeback detection platform 125. In some embodiments, the token optimization platform 127 or one or more components of the token optimization platform 127 may be part of the chargeback detection platform 125.

The token optimization platform 127 may include a tokenizer/de-tokenizer 231 and an analytics processor 233. In an embodiment, the tokenizer/de-tokenizer 231 may tokenize the identifying information of transactions associated with the individual, PII, and the unique account identification associated with the aggregated data. The tokenized data may be further sent to analytics processor 233 for analyzing aggregated data and generating a fraud analysis profile. The analytics processor 233 may use text analyzer, clustering, thesaurus, relevancy, and other custom rules to analyze the aggregated data and generate the fraud analysis profile. The tokenizer/de-tokenizer 231 may de-tokenize the generated fraud analysis profile and store the profile in the profile database 224. In an example embodiment, the dispute monitor 225 may notify the chargeback processing engine 221 once the profile is generated and stored into the profile database 224. The chargeback processing engine 221 may analyze one or more chargeback transaction(s) against the generated fraud analysis profile, determine a multidimensional score, and send the analysis and multidimensional score to the requesting issuer(s). Examples of the components and operations of a token optimization platform are described in U.S. Patent Application No. 15/825,255, titled SYSTEMS AND METHODS FOR CROSS-ISSUER CHARGEBACK FRAUD DETECTION SYSTEM, filed November 29, 2017 and U.S. Patent No. 11,790,367, titled SYSTEMS AND METHODS FOR OPTIMIZING ELECTRONIC REFUND TRANSACTIONS FOR DETECTED FRAUDULENT TRANSACTIONS, filed March 18, 2020, the entire contents of each of which are incorporated by reference herein.

REFUND OPTIMIZATION PLATFORM

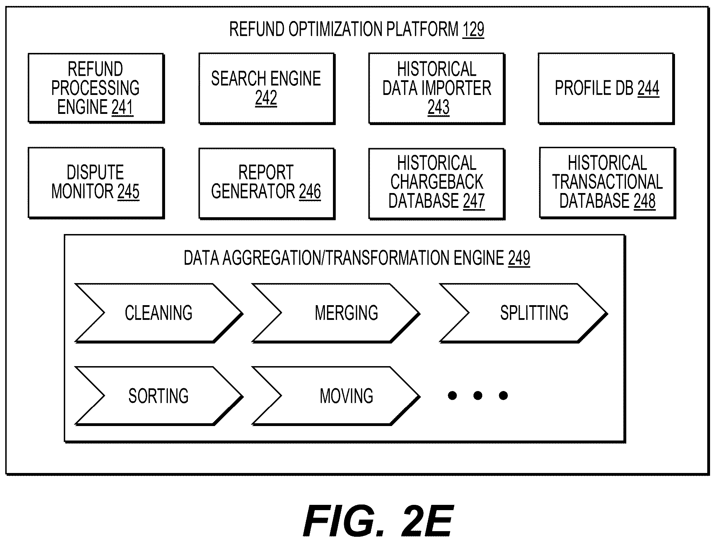

Referring to FIG.2E, in an example embodiment, the second sub-system 105 (e.g., acquirer processor) may communicate with the integrated data optimization system 112 for refund optimization. For example, the integrated data optimization system 112 may communicate with a refund optimization platform 129, which may include a refund processing engine 241, profile database 244, historical transactional database 248, and historical chargeback database 247. The profile database 244 for an access device 103 (e.g., consumer) may include a unique identifier hash recognizing the profile associated with the individual's payment vehicles (e.g., debit, credit cards), personally identifiable information (PII), identifying information of transactions associated with the individual, and analysis of an individual's spending habits, geographic area, and fraud activities reported on the payment vehicles associated with the individual. In an example embodiment, the personally identifiable information (PII) about the access device 103 (e.g., consumer) may include, for example, at least one of his/her name, email address, date of birth, social security number, and physical address, etc. The historical transactional database 248 may include transaction data associated with the access device 103 (e.g., payment vehicle). The historical transactional database 248 may include tables containing information associated with one or more transaction(s), such as, for example, a source ID, a terminal ID, a date and time of the transaction, an IP address, a location of the transaction, and a transaction amount. In an example embodiment, historical chargeback database 247 may include chargeback history associated with access device 103 (e.g., consumer) from one or more third sub-systems 107 (e.g., issuers).

In an example embodiment, the refund optimization platform 129 may receive, through the integrated data optimization system 112, one or more chargeback(s) analysis requests from one or more first sub-systems 101 (e.g., merchants) and second sub-system 105 (e.g., acquirer processor), and suspected and reported fraud and chargeback information from one or more third sub-systems 107 (e.g., issuers) and payment network 111. The refund optimization platform 129 may further include, for example, a search engine 242, report generator 246, historical data importer 243, dispute monitor 245, and data aggregation/transformation engine 249.

In an example embodiment, the first sub-systems 101 (e.g., merchants) may submit a chargeback analysis request for a transaction and the third sub-systems 107 (e.g., issuers) may submit suspected or reported frauds and chargebacks using a computer interface, such as a web application or application programming interface (API), over a computer network (e.g., network 109). In an example embodiment, first sub-systems 101 (e.g., merchants) and third sub-systems 107 (e.g., issuers) may use an Application Programming Interface (API) and Hypertext Transfer Protocol (HTTP). The first sub-systems 101 (e.g., merchants) and third sub-systems 107 (e.g., issuers) may use HTTP CRUD (Create, Read, Update, Delete) operations to send the chargeback analysis request and reported frauds to the refund processing engine 241.

In the above-illustrated embodiment, the refund processing engine 241 may extract at least one of identifying information of transactions associated with access device 103 (e.g., consumer), personally identifiable information (PII) and a unique account identification submitted by the first sub-systems (e.g., merchants) and third sub-systems 107 (e.g., issuers). The refund processing engine 241 may query the search engine 242 to retrieve a chargeback analysis profile associated with the identifying information, PII or the unique account identification. The search engine 242 may search for the chargeback analysis profile in a profile database 244.

In an example embodiment, search engine 242 may find the chargeback analysis profile for the queried chargeback(s) analysis request. The search engine 242 may further determine whether the chargeback analysis profile is generated within a specific time period (e.g., date and time), if such a time period is provided by the refund processing engine 241. The search engine 242 may then deliver the chargeback analysis profile to the refund processing engine 241. The refund processing engine 241 may analyze the chargeback against the chargeback analysis profile. The chargeback analysis profile may include spending irregularities or suspicious activities associated with the unique account identification or the individual. The refund processing engine 241 may analyze the chargeback(s) against spending irregularities or suspicious activities provided in the chargeback analysis profile.

The refund processing engine 241 may, for example, determine a multidimensional score for the chargeback(s) according to the analysis of chargeback(s) against the chargeback analysis profile. The multidimensional score may indicate, for example, a likelihood that a transaction, or multiple transactions meeting specified criteria, will result in a chargeback and/or a likelihood that such transactions will result in a chargeback even if a proactive refund is provided. The refund processing engine 241 may present the analysis and multidimensional score to the requester first sub-system 101 (e.g., merchant) and issuer (e.g. 202, 204, 206) using a computer interface, such as web application or application programming interface (API), over a computer network (network 109). In an alternative embodiment, the refund processing engine 241 may utilize report generator 246 to analyze the chargeback against the chargeback analysis profile and generate a report to be sent to the requesting merchant(s). The report could be sent to one or more first sub-systems 101 (e.g., merchants) using, for example, an API or email address of an agent requesting the chargeback analysis. Report generator 246 may be a cloud platform performing the analysis using HTTP protocol.

In an alternative embodiment, first sub-systems 101 (e.g., merchants) and third sub-systems 107 (e.g., issuers) may configure, through the integrated data optimization system 112, the refund processing engine 241 to retrieve chargeback analysis profile for chargeback(s) within a specific range of values of goods and services. In a yet another embodiment, the refund processing engine 241 may provide chargeback alert parameters for future transactions to the first sub-system(s) 101. The fraud alert parameters may be at least one of geographical restrictions, first sub-system 101 (e.g., merchant) restrictions, purchase price restrictions, etc. Chargeback alert parameters may automatically detect transactions meeting a specified threshold likelihood that the transaction will result in a chargeback or a threshold likelihood that the transaction will result in a chargeback even if a proactive refund is provided.

In an example embodiment, report generator 246 may be a cloud platform (e.g., Web Service), where the report generator 246 may communicate with the refund processing engine 241 using a Representational State Transfer (REST) Application Programming Interface (API). In an example embodiment, the dispute monitor 245 may be responsible for tracking the chargeback analysis request and generating an analysis report. The dispute monitor 245 may make calls to an API published by report generator 246 to track progress of analysis report generation and chargeback analysis profile generation.

In an alternative embodiment, if the chargeback analysis profile is not available for the requested chargeback analysis, search engine 242 may send a message to refund processing engine 241. The refund processing engine 241 may generate a unique hash and a chargeback analysis profile request. The refund processing engine 241 may send the chargeback analysis profile request including the unique hash to historical data importer 243 to generate chargeback analysis profile for received identifying information of transactions associated with access device 103 (e.g., consumer), PII, or unique account identification. The historical data importer 243 may further import historical chargeback disputes from one or more merchant(s) and issuer(s) associated with at least one of the identifying information of transactions associated with the individual, PII, and unique account identification.

The historical data importer 243 may further import historical transactions from historical transactional database 248. The historical transactional database 248 may include historical transactions from one or more first sub-systems 101 (e.g., merchants) and third sub-systems (e.g., issuers). The historical transactions may be retrieved from payment networks 111, when transaction authorization requests are sent for a payment transaction from an online or brick-and-mortar first sub-system 101 (e.g., merchant) from point of sale terminal to financial institutions (e.g., third sub-systems 107). Transaction information for historical transactions may be retrieved before the authorization requests are routed to the financial institutions (e.g., third sub-systems 107).

The historical data importer 243 may send the retrieved historical chargeback data and historical transaction data along with a chargeback analysis profile request to a data aggregation/transformation engine 249. The main tasks of data aggregation/transformation 232 may include data extraction, transformation, and loading into a temporary storage system. The data aggregation/transformation engine (e.g., processor) 232 may perform further operations such as data moving, cleaning, splitting, translation, merging, and sorting. The data aggregation/transformation engine 249 may store the transformed data in standard format such as, for example, in a relational database or a distributed file system.

In some embodiments, the token optimization platform 127 may be utilized with the refund optimization platform 129. For example, the tokenizer/de-tokenizer 231 of the token optimization platform 127 may tokenize the identifying information of transactions associated with the individual, PII, and the unique account identification associated with the aggregated data. The tokenized data may be further sent to analytics processor 233 for analyzing aggregated data and generating a chargeback analysis profile. The analytics processor 233 may use text analyzer, clustering, thesaurus, relevancy, and other custom rules to analyze the aggregated data and generate the chargeback analysis profile. The tokenizer/de-tokenizer 231 of the token optimization platform 127 may de-tokenize the generated chargeback analysis profile and store the profile in the profile database 244. In an example embodiment, the dispute monitor 245 may notify the refund processing engine 241 once the profile is generated and stored into the profile database 244. The refund processing engine 241 may analyze one or more chargeback transaction(s) against the generated chargeback analysis profile, determine a multidimensional score, and send the analysis and multidimensional score to the requesting merchant(s). The multidimensional score may indicate, for example, a likelihood that a transaction, or multiple transactions meeting specified criteria, will result in a chargeback and/or a likelihood that such transactions will result in a chargeback even if a proactive refund is provided.

In some embodiments, the token optimization platform 127 or one or more components of the token optimization platform 127 may be part of the refund optimization platform 129. In some embodiments, the chargeback detection platform 125 and the refund optimization platform 129 may be integrated as a single platform and the single perform the functions of the chargeback detection platform 125 and the refund optimization platform 129. Examples of the components and operations of a refund optimization platform are described in U.S. Patent No. 11,790,367, titled SYSTEMS AND METHODS FOR OPTIMIZING ELECTRONIC REFUND TRANSACTIONS FOR DETECTED FRAUDULENT TRANSACTIONS, filed March 18, 2020, the disclosure of which is incorporated by reference herein.

AUTHENTICATION OPTIMIZATION PLATFORM

In one embodiment, the authentication optimization platform 131 may be a platform with multiple interconnected components. The authentication optimization platform 131 may include one or more servers, intelligent networking devices, computing devices, components, and corresponding software. The authentication optimization platform 131 may receive a request from the integrated data optimization system 112 for processing an electronic message, which may be received from the first sub-system 101. The electronic message (e.g., online transaction) may be associated with an access device of the access device 103. In one instance, electronic messages may be online transactions for adding/removing funds from an account for a service. In one instance, the electronic message may be a special electronic message (e.g., CNP transaction or any other transaction type). The authentication optimization platform 131 may determine whether to require an extra layer of authentication for the received electronic messages. An example of the extra layer of authentication may include 3D secure. 3D secure is a protocol that enhances the security of electronic messages (e.g., online transactions) by adding an extra layer of authentication. Each network may have its own set of authentication protocols and security measures.

The authentication optimization platform 131 may processes past data to determine a plurality of factors (e.g., the probability of an approval of the electronic message, the probability of a chargeback, the probability of fraud, the value of the electronic message, the latency in communicating the electronic message within a network system, and/or the preference information of the access device 103) for handling the electronic message. By systematically evaluating these parameters, the authentication optimization platform 131 may intelligently select the most optimal situations to require the 3D secure. This dynamic selection may ensure that the transaction authentication process is optimized through the most efficient network route, reducing latency and facilitating quicker response.

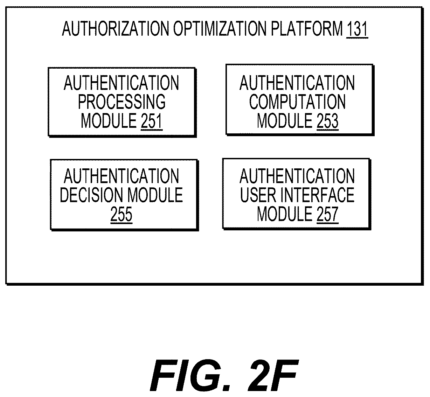

Referring to Fig. 2F, in one embodiment, the authentication optimization platform 131 may include an authentication processing module 251, an authentication computation module 253, an authentication decision module 255, an authentication user interface module 257, and/or any combination thereof. It is contemplated that the functions of these components are combined in one or more components or performed by other components of equivalent functionality.

In one embodiment, the authentication processing module 251 may collect, in real-time or near real-time, relevant data associated with the electronic messages (e.g., online transactions), user(s) (e.g., customers), and/or merchant(s), through various data collection techniques. The authentication processing module 251 may include various software applications (e.g., data mining applications in Extended Meta Language (XML)) that automatically search for and return relevant data. For example, the authentication processing module 251 may use a web-crawling component to access various data sources to collect relevant data pertaining to the electronic messages and/or the users, so that risk identification, analysis, routing, and monitoring are performed using the most recent data.

In one instance, the relevant data associated with the users may include transaction data (e.g., transaction history, past fraudulent transactions, etc.), financial data (e.g., past financial information, credit reports, chargeback data, etc.), preference data, and/or personal data. In one instance, the relevant data associated with the merchants may include transaction volume, financial data, chargeback statistics, and/or service type. In one instance, the relevant data associated with the electronic messages may include latency data and/or transaction metadata (e.g., timestamps, transaction identifiers, geolocation).

In one embodiment, the authentication processing module 251 may perform data standardization (e.g., standardizing and unifying data) and/or data cleansing on the collected data. For example, data standardization may include converting the collected data into a common format (e.g., machine readable form) that is easily processed by other modules and platforms. For example, data cleansing may include removing or correcting erroneous data by cross-checking the data with a validated data set or validating and correcting values against a known list of entities.

In one embodiment, the authentication computation module 253 may calculate the probability of approval of the electronic message based on the approval rate of past electronic messages. In some embodiments, the probability of approval may be based on a status of a (financial) account associated with the electronic message and/or access device 103, or other factors, such as, for example, the presence or absence of a billing address, the presence or absence of a card verification value (CVV), the presence or absence of a payment vehicle expiration date, the presence or absence of a payment vehicle issuer token, a merchant classification code (MCC), etc. In some embodiments, the authentication computation module 253 may determine the likelihood that a transaction will be declined by each payment network.

In one embodiment, the authentication computation module 253 may calculate expected benefits to the first sub-system 101 (e.g., merchant(s)) based on a payment network selection regarding the probability of the approval of the electronic message and the value of the electronic message (e.g., transaction cost). In one embodiment, the authentication computation module 253 may calculate a differential value (e.g., differential cost) for authorizing and settling the electronic message among various payment networks based on one or more fees (e.g., interchange fees, switch fees, ancillary fees, or any other fees). In one embodiment, the authentication computation module 253 may calculate the probability of the chargeback based on the number of electronic messages submitted for chargeback and the total number of electronic messages within the payment segments. In one embodiment, the authentication computation module 253 may calculate an expected value of the fraud based on the probability of the chargeback, a cost of the chargeback, and/or a value of the electronic message within the payment segments. The authentication computation module 253 may transmit the differential value, expected value, and expected benefits to the authentication decision module 255.

In one embodiment, the authentication decision module 255 may determine whether the expected value of fraud and the transaction cost would outweigh the benefit of improved authorization/authentication by using the 3D secure service. If the authentication decision module 255 determines that the expected value of fraud and the transaction cost would outweigh the benefit of improved authorization/authentication, the authentication decision module 255 may recommend not requiring the 3D secure service for the electronic message. If the authentication decision module 255 determines that the expected value of fraud and the transaction cost would not outweigh the benefit of improved authorization/authentication, the authentication decision module 255 may recommend requiring the 3D secure service for the electronic message. In one instance, the authentication decision module 255 may determine whether to require the 3D secure service for an electronic message based on pre-configured rules, attributes of the electronic message (e.g., cost of the online transaction, transaction type, merchant type, etc.), or preference information of the participants (e.g., least cost routing, most secure routing, etc.).

The authentication user interface module 257 may enable, through the integrated data optimization system 112, a presentation of a graphical user interface (GUI) in the first sub-system 101, the access device 103, the second sub-system 105, and the third sub-system 107 for facilitating the electronic message. In one embodiment, the authentication user interface module 257 may employ various application programming interfaces (APIs) or other function calls to enable the display of graphics primitives such as buttons, data entry fields, menus, graphs, icons, etc. The authentication user interface module 257 may cause interfacing of guidance information to include, at least in part, one or more annotations, audio messages, video messages, or a combination thereof pertaining to the electronic message. The authentication user interface module 257 may also include a variety of interfaces, for example, interfaces for data input and output devices, referred to as I/O devices, storage devices, and the like. Still further, the authentication user interface module 257 may be configured to operate in connection with augmented reality (AR) processing techniques, wherein various applications, graphic elements, and features interact.

In one embodiment, the authentication optimization platform 131 may assess the plurality of factors (e.g., approval rate, network cost, probability of chargeback, expected expenses for fraud, latency in communicating the electronic message, and preference information) and assign weights based on their significance. In one example, if the cost associated with a network is deemed to be more important than other factors, it is assigned a higher weight. The authentication optimization platform 131 may calculate a weighted value that reflects the overall risks and expenses associated with the network selection. The decision to require a 3D secure service may be then based on these calculated weighted values, ensuring a comprehensive and data-driven approach to transaction authentication that balances cost, risk of fraud, and authorization probability.

PIN SUPPRESSION PLATFORM

In one embodiment, the PIN suppression platform 133 may be a platform with multiple interconnected components. The PIN suppression platform 133 may include one or more servers, intelligent networking devices, computing devices, components, and corresponding software. The PIN suppression platform 133 may receive a request from the integrated data optimization system 112 for processing an electronic message received from the first sub-system 101. The electronic message (e.g., online transaction) may be associated with an access device of the access device 103. In one instance, electronic messages may be online transactions for adding/removing funds from an account for a service. In one instance, the electronic message may be a special electronic message (e.g., CNP transaction or any other transaction type). In some embodiments, the system 100 and or the PIN suppression platform 133 may perform a function called "PIN prompting," which may reduce acceptance costs by shifting signature transactions to PIN debit transactions, and seamlessly routing signature debit transactions to least-cost PIN-less debit networks. In some embodiments, the PIN suppression platform 133 may determine whether to override a customer entered PIN or not considering various factors.

The PIN suppression platform 133 may processes past data to determine a plurality of factors (e.g., the probability of an approval of the electronic message, the probability of a chargeback, the probability of fraud, the value of the electronic message, the latency in communicating the electronic message within a network system, and/or the preference information of the access device 103) for handling the electronic message. By systematically evaluating these parameters, the PIN suppression platform 133 may intelligently select the most optimal situations to override a customer entered PIN. This dynamic selection may ensure that the transaction authentication process is optimized through the most efficient network route, reducing overall transaction costs.

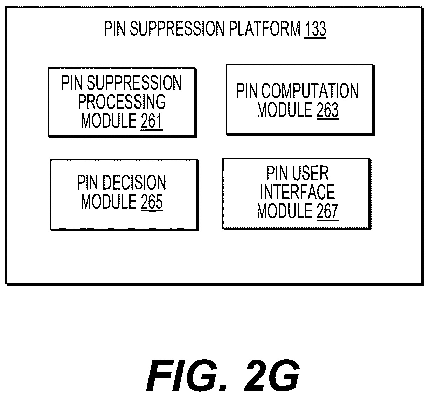

Referring to Fig. 2G, in one embodiment, the PIN suppression platform 133 may include a PIN suppression processing module 261, a PIN suppression computation module 263, a PIN decision module 265, a PIN user interface module 267, and/or any combination thereof. It is contemplated that the functions of these components are combined in one or more components or performed by other components of equivalent functionality.

In one embodiment, the PIN suppression processing module 261 may collect, in real-time or near real-time, relevant data associated with the electronic messages (e.g., online transactions), user(s) (e.g., customers), and/or merchant(s), through various data collection techniques. The PIN suppression processing module 261 may include various software applications (e.g., data mining applications in Extended Meta Language (XML)) that automatically search for and return relevant data. For example, the PIN suppression processing module 261 may use a web-crawling component to access various data sources to collect relevant data pertaining to the electronic messages and/or the users, so that risk identification, analysis, routing, and monitoring are performed using the most recent data.

In one instance, the relevant data associated with the users may include transaction data (e.g., transaction history, past fraudulent transactions, etc.), financial data (e.g., past financial information, credit reports, chargeback data, etc.), preference data, and/or personal data. In one instance, the relevant data associated with the merchants may include transaction volume, financial data, chargeback statistics, and/or service type. In one instance, the relevant data associated with the electronic messages may include latency data and/or transaction metadata (e.g., timestamps, transaction identifiers, geolocation).

In one embodiment, the PIN suppression processing module 261 may perform data standardization (e.g., standardizing and unifying data) and/or data cleansing on the collected data. For example, data standardization may include converting the collected data into a common format (e.g., machine readable form) that is easily processed by other modules and platforms. For example, data cleansing may include removing or correcting erroneous data by cross-checking the data with a validated data set or validating and correcting values against a known list of entities. In some embodiments,

In one embodiment, the PIN suppression computation module 263 may calculate the probability of approval of the electronic message based on the approval rate of past electronic messages. In some embodiments, the probability of approval may be based on a status of a (financial) account associated with the electronic message or access device 103, or other factors, such as, for example, the presence or absence of a billing address, the presence or absence of a card verification value (CVV), the presence or absence of a payment vehicle expiration date, the presence or absence of a payment vehicle issuer token, a merchant classification code (MCC), etc. In some embodiments, the PIN suppression computation module 263 may determine the likelihood that a transaction will be declined by each payment network.

In one embodiment, the PIN suppression computation module 263 may calculate expected benefits to the first sub-system 101 (e.g., merchant(s)) based on a payment network selection regarding the probability of the approval of the electronic message and the value of the electronic message (e.g., transaction cost). In one embodiment, the PIN suppression computation module 263 may calculate a network cost for authorizing and settling the electronic message among various payment networks based on one or more fees (e.g., interchange fees, switch fees, ancillary fees, or any other fees). In one embodiment, the PIN suppression computation module 263 may calculate the probability of the chargeback based on the number of electronic messages submitted for chargeback and the total number of electronic messages within the payment segments. In one embodiment, the PIN suppression computation module 263 may calculate an expected value of the fraud based on the probability of the chargeback, a cost of the chargeback, and/or a value of the electronic message within the payment segments. The PIN suppression computation module 263 may transmit the probability/cost of the chargeback, network cost, expected value of fraud, and expected benefits to the PIN decision module 265. In one embodiment, the PIN decision module 265 may determine whether to override a customer entered PIN or not considering these various factors. In one instance, the PIN decision module 265 may determine whether to override a customer entered PIN based on pre-configured rules, attributes of the electronic message (e.g., cost of the online transaction, transaction type, merchant type, etc.), or preference information of the participants (e.g., least cost routing, most secure routing, etc.).

The PIN user interface module 267 may enable, through the integrated data optimization system 112, a presentation of a graphical user interface (GUI) in the first sub-system 101, the access device 103, the second sub-system 105, and the third sub-system 107 for facilitating the electronic message. In one embodiment, the PIN user interface module 267 may employ various application programming interfaces (APIs) or other function calls to enable the display of graphics primitives such as buttons, data entry fields, menus, graphs, icons, etc. The PIN user interface module 267 may cause interfacing of guidance information to include, at least in part, one or more annotations, audio messages, video messages, or a combination thereof pertaining to the electronic message. The PIN user interface module 267 may also include a variety of interfaces, for example, interfaces for data input and output devices, referred to as I/O devices, storage devices, and the like. Still further, the PIN user interface module 267 may be configured to operate in connection with augmented reality (AR) processing techniques, wherein various applications, graphic elements, and features interact.

In one embodiment, the PIN suppression platform 133 may assess the plurality of factors (e.g., approval rate, network cost, probability of chargeback, expected expenses for fraud, latency in communicating the electronic message, and preference information) and assign weights based on their significance. In one example, if the cost associated with a network is deemed to be more important than other factors, it is assigned a higher weight. The PIN suppression platform 133 may calculate a weighted value that reflects the overall risks and expenses associated with each network selection. The decision to override the customer entered PIN may be then based on these calculated weighted values, ensuring a comprehensive and data-driven approach to transaction authentication that balances cost, risk of fraud, and authorization probability.

INTEGRATED DATA OPTIMIZATION SYSTEM

In some embodiments, the system 100 may include an integrated data optimization system 112. The integrated data optimization system 112 may be configured to consider various data and/or factors transmitted from one or more platforms of the platform cluster 120, and provide optimized solutions and/or guidance on how to handle electronic messages (e.g., electronic transactions) and financial operations, for example, based on integrated sophisticated machine learning algorithms, real-time analytics, and dynamic optimization techniques. This may enable adaptive learning and predictive capabilities, reducing false positives and enhancing the accuracy of fraud decisions. In some embodiments, the integrated data optimization system 112 may include an intelligent orchestration module 113 and/or machine learning engine 115.

The intelligent orchestration module 113 may be provided to manage and optimize complex processes for handling electronic messages and financial operations by automating decision-making, coordinating workflows, and integrating data across multiple systems/modules/platforms in real-time. In the context of payment systems or financial services, the intelligent orchestration module 113 may dynamically route transactions, optimize payment paths, and/or assess risk by leveraging machine-learning algorithms, predictive analytics, and real-time data inputs.

In one embodiment, the intelligent orchestration module 113 may collect, in real-time or near real-time, relevant data associated with the electronic messages (e.g., online transactions), user(s) (e.g., customers), and/or merchant(s), through various data collection techniques. The intelligent orchestration module 113 may include various software applications (e.g., data mining applications in Extended Meta Language (XML)) that automatically search for and return relevant data. For example, the intelligent orchestration module 113 may use a web-crawling component to access various data sources to collect relevant data pertaining to the electronic messages and/or the users, so that risk identification, analysis, routing, and monitoring are performed using the most recent data.

In one instance, the relevant data associated with the users may include transaction data (e.g., transaction history, past fraudulent transactions, etc.), financial data (e.g., past financial information, credit reports, chargeback data, etc.), preference data, and/or personal data. In one instance, the relevant data associated with the merchants may include transaction volume, financial data, chargeback statistics, and/or service type. In one instance, the relevant data associated with the electronic messages may include latency data and/or transaction metadata (e.g., timestamps, transaction identifiers, geolocation).

In one embodiment, the intelligent orchestration module 113 may perform data standardization (e.g., standardizing and unifying data) and/or data cleansing on the collected data. For example, data standardization may include converting the collected data into a common format (e.g., machine readable form) that is easily processed by other modules and platforms. For example, data cleansing may include removing or correcting erroneous data by cross-checking the data with a validated data set or validating and correcting values against a known list of entities.

The machine-learning engine 115 may be provided to identify patterns and generate predictive insights to optimize various processes/parameters. In a payment or transaction system, the machine-learning engine 115 can be used to detect fraud, predict the most efficient routes for data or transactions. In one embodiment, the machine-learning engine 115 may be configured for supervised machine-learning that utilizes training data (e.g., training data 412 illustrated in the training flow chart 400). The trained model is configured for processing historical data associated with the operation of one or more platforms of the platform cluster 120 to learn patterns related to or indicative of fraudulent activities, chargebacks, cost of transactions/retry, network pairing, network cost, latency in communicating the electronic messages, and/or approval rate of the electronic messages, and so on. In one example embodiment, the machine learning engine 115 may perform model training using training data, for example, data from other modules/platforms/systems (e.g., data transmitted/extracted from one or more platforms of the platform cluster 120), that contain input and correct output, to allow the model to learn over time. In some embodiments, the training is performed based on the deviation of a processed result from a documented result when the inputs are fed into the machine learning model (e.g., an algorithm measures its accuracy through the loss function, adjusting until the error has been sufficiently minimized).

In one embodiment, the labeled dataset serves as the foundation for training the machine learning model, the machine learning model analyzes the input features and corresponding labels to identify patterns and relationships. By leveraging the labeled dataset, the machine learning model iteratively adjusts its parameters and optimizes its predictive capabilities to develop an accurate algorithm for identifying undocumented or at-risk diabetic patients.

In one embodiment, the machine-learning module 115 may randomize the ordering of the training data, visualize the training data to identify relevant relationships between different variables, identify any data imbalances, and split the training data into two parts where one part is for training a model and the other part is for validating the trained model, de-duplicating, normalizing, correcting errors in the training data, and so on. The machine-learning engine 115 may implement various machine-learning techniques, e.g., deep-learning algorithms, knowledge graphs, association rule learning, neural network (e.g., recurrent neural networks, graph convolutional neural networks, deep neural networks), inductive programming logic, support vector machines, Bayesian models, Gradient boosted machines (GBM), LightGBM (LGBM), Xtra tree classifier, etc.

By utilizing advanced algorithms and pattern recognition, machine learning models can analyze vast amounts of transaction data to identify patterns, anomalies, and potential fraud indicators. The machine learning algorithms can learn from historical transaction data to predict the probability of various factors, such as electronic message approval/decline, chargeback, and fraud for a given set of parameters and estimate an expected value of fraud (e.g., expected expenses for fraud), a cost of the chargeback, and/or a value of the electronic message within the payment segments (e.g., identification data, electronic message type, total value of the electronic message, category code data, and/or temporal information) based on the predicted probability of the various factors. This may enable dynamic and adaptive decision-making during the operation of the system 100 and/or the integrated data optimization system 112 for the first sub-system(s) 101, the second sub-system(s) 105 (e.g., acquirer sub-system), the third sub-system(s) 107, and/or the access device(s) 103. Additionally, the machine learning model can continuously evolve and adapt to new and emerging threats, proving a proactive defense against evolving fraud tactics. In some embodiments, the routing server 117 may operate in conjunction with the machine learning engine 115, dynamically directing transactions, request, or data packets through the most efficient and secure paths, often considering multiple variables like: cost, time, and network congestion. In some embodiments, the routing server 117 may be a computing system comprising at least one processor and at least one data storage device, e.g., database. In some embodiments, the routing server 117 may receive information from the first sub-system(s) 101, maintain the database of stored information related to payment networks, issuers, regulatory status, rate qualification criteria, etc., periodically or continually update its database, and transmit information back to first sub-system(s) 101. The database of the routing server 117 may further include a dataset of processing results that may be used to determine a likelihood of authorization or conversion for subsequent transaction requests. Upon the initiation of an electronic message (e.g., transaction) at the first sub-system(s) 101, the routing server 117 may receive various transaction related information, which may include, but is not limited to, a BIN, identifications of available payment networks useable in the transaction ("payment network IDs"), merchant categories, regulatory status, transaction amount, "preferred" or "premier" status, etc. In some embodiments, the payment network identification may include a payment card number, whose first six digits may identify an issuer and/or bank institution that is associated with a payment network.

Upon receiving the transaction-related information, the routing server 117 may use the extracted payment network identification to determine which payment networks 111 a transaction may be used. Depending on the payment networks available, the routing server 117 may subsequently use that payment network's rate qualification criteria to determine the standard rates vs. preferred rates for the transaction. In some embodiments, the routing server 117 may also use the rate qualification criteria to determine information about the relevant issuer, such as a regulatory status. In some embodiments, the regulatory status is determined by the identity of the issuer (e.g., more or less than $10B in assets), whereas the standard vs. preferred rate is determined by the payment network. In some embodiments, the routing server 117 may also determine the likelihood that an electronic message (e.g., transaction) will be declined by each payment network and the additional costs of a declined transaction. The likelihood of decline/acceptance may be based on a status of a financial account associated with the electronic message or the access device, or other factors, such as, for example, the presence or absence of a billing address, the presence or absence of a card verification value (CVV), the presence or absence of a payment vehicle expiration date, the presence or absence of a payment vehicle issuer token, a merchant classification code (MCC), etc. Once the acceptance rate, costs of declined transactions. Examples of the components and operations of a routing server are described in U.S. Patent No. 10,990,972, titled SYSTEMS AND METHODS FOR ROUTING ELECTRONIC TRANSACTIONS USING PSEUDO-NETWORK SIMULATION, December 19, 2016, U.S. Patent No. 10,706,393, titled SYSTEMS AND METHODS FOR ROUTING ELECTRONIC TRANSACTIONS USING PREDICTED AUTHORIZATION APPROVAL, filed December 12, 2017, and U.S. Patent No. 11,282,075, titled SYSTEMS AND METHODS FOR OPTIMIZED ROUTING OF ELECTRONIC TRANSACTIONS ACROSS MULTIPLE ACQUIRER PROCESSORS, filed December 12, 2017, the entire contents of each of which are incorporated by reference herein.

In some embodiments, the integrated optimization system 112 may receive client goals and inputs via the client goals and inputs module 119. The client goals and inputs module 119 may include objectives set by the user or business (e.g., first sub-system 101, second sub-system 105, and/or third sub-system 107, or any other individuals or businesses), such as minimizing transaction costs, enhancing fraud detection accuracy, higher security (e.g., for higher value electronic messages), or optimizing delivery times. The client goals and inputs module 119 may collect and process the necessary data from the clients, system, or external sources, feeding this data into the intelligent orchestration module 113, machine learning engine 115 and/or routing server 117 to ensure decisions align with the client's goal.

In some embodiments, the integrated data optimization system 112 (e.g., intelligent orchestration module 113) may receive a request from a first sub-system 101 (e.g., merchant system) for an electronic message associated with an access device 103 (e.g., user/client device). In some embodiments, the electronic message may be a special electronic message (e.g., CNP transaction or any other special type of transactions). In other embodiments, the electronic message may be a normal/general/standard electronic message.

In some embodiments, the integrated data optimization system 112 (e.g., intelligent orchestration module 113 or machine learning engine 115 may analyze the request for the electronic message. For example, integrated data optimization system 112 may analyze the request for the electronic message using one or more outcomes generated by the machine learning engine 115. The machine learning engine 115 may be trained based on a set of training data from one or more platforms in the platform cluster 120.

In some embodiments, the analysis of the request may include comparing data and/or various factors from one or more platforms in the platform cluster 120. For example, the intelligent orchestration module 113 and/or the machine learning engine 115 may compare the data and/or various factors transmitted/extracted from one or more platforms of the platform cluster 120 (e.g., comparing data/factor from one platform with another data/factor from the same or another platform). Examples of the data may include any data stored in or available to one or more platforms of the platform cluster 120 (e.g., any data in the profile database, transaction database, chargeback database, or any other database or data storage of one or more platforms of the platform cluster 120). Examples of the various factors may include one or more of a probability of approval of the electronic message, a probability of a chargeback, a probability of fraud, a value of the electronic message, a latency in communicating the electronic message within a network system, the preference information of the access device 103, whether the electronic message is a card present transaction or a card not present transaction. In some embodiments, the preference information of the access device 103 may be also provided from the client goals and inputs module 119.

In some embodiments, the data and/or various factors that are compared may be provided from at least two of the platforms in the platform cluster 120, such as the authorization optimization platform 121, the fraud detection platform 123, the chargeback detection platform 125, the token optimization platform 127, the refund optimization platform 129, the authentication optimization platform 131, and the PIN suppression platform 133. That is, in this case, the integrated data optimization system 112 may compare data from different platforms. In some other embodiments, the analysis of the request may include comparing data and/or various factors from one of the plurality of platforms in the platform cluster 120.

In some embodiments, the data/factors to be compared may include predictive data generated from one or more of the platforms of the platform cluster 120. For example, the predictive data may include one or more of a probability of approval of the electronic message, a probability of a chargeback, a probability of fraud, a value of the electronic message, an estimated latency in communicating the electronic message within a network system, or any other predictive data discussed in this application or in the applications that are incorporated by reference.

In some embodiments, the integrated data optimization system 112 (e.g., intelligent orchestration module 113) may implement one or more tasks based on the analysis of the request. The one or more tasks may include at least one of a fraud detection task configured to determine whether the electronic message is indicative of a fraudulent activity; a chargeback fraud detection task configured to determine a likelihood of a chargeback fraud for the electronic message; a refund task configured to determine whether the electronic message corresponds to a chargeback case appropriate for a proactive refund; an authorization task configured to determine whether to authorize the request for the electronic message; and an authentication task configured to determine whether to require an additional authenticating credential (e.g., signature, fingerprint, 3D secure, or PIN) to authorize the request for the electronic message. In some embodiments, the one or more tasks may further include a PIN suppression task configured to determine whether to override a customer entered PIN, or any other tasks that can be performed by one or more components of the system 100 and/or are discussed in the present disclosure, including the applications incorporated by reference. In some embodiments, the functions/tasks that can be implemented by one or more of the platforms of the platform cluster may be implemented at the integrated data optimization system 112, for example, based on the data received from one or more platforms of the platform cluster.

In some embodiments, the analysis of the request may include: weighing, for a specific task, the data (e.g., predictive data) from the plurality of platforms. For example, the integrated data optimization system 112 (e.g., intelligent orchestration module 113 or machine learning engine 115) may access/weigh, for a specific task, data (e.g., probability of approval of the electronic message, probability of a chargeback, probability of fraud, value of the electronic message, latency in communicating the electronic message within a network system, and/or client goal), based on their significance. Then, the integrated data optimization system 112 may determine the priority of the data for the specific task and/or assign weights based on their significance. In some embodiments, the weight of the data may be determined based on the type of the tasks.

For example, when the specific task is the fraud detection task, data (e.g., probability of fraud) from the fraud detection platform 123 may be prioritized over data from any other platforms in the platform cluster 120 (e.g., probability of approval of the electronic message, the probability of a chargeback, the value of the electronic message, and the latency in communicating the electronic message within a network system). In some embodiments, the integrated data optimization system 112 may decline the electronic message (e.g., transaction) based on the data from the fraud detection platform 123 alone when the specific task is the fraud detection task.

When the specific task is the chargeback detection task and/or a refund task, data (e.g., probability of chargeback) from the chargeback detection platform 125 and or the refund optimization platform 129 may be prioritized over data from other platforms in the platform cluster 120 (e.g., probability of approval of the electronic message, probability of fraud, value of the electronic message, and latency in communicating the electronic message within a network system).

In some embodiments, when the specific task is the authorization task configured to determine whether to authorize the request for the electronic message and/or the authentication task configured to determine whether to require an additional authenticating credential (e.g., signature, finger print, 3D secure, or pin) to authorize the request for the electronic message, fraud and value related data (e.g., probability of general or chargeback fraud and value of the electronic message) may be prioritized over other data (e.g., latency in communicating the electronic message).

In some embodiments, the weight of the data may be determined based on the client goals and inputs from the client goals and inputs module 119. For example, if the input client goal is minimizing transaction costs, all or some of the data related to the cost (e.g., cost/value associated with a network and/or electronic message) is assigned a higher weight than other data that is not related to the cost. If the input client goal is higher security, for example, for higher value electronic messages, all or some of the data related to the security of the transaction (e.g., probability of fraud, secure network selection) is assigned a higher weight than other data that is not related to the security (transaction/network cost). If the input client goal is optimizing delivery times, all or some of the data related to the delivery time (e.g., latency in the network) is assigned a higher weight than other data that is not related to the speed of the network.

In some embodiments, the client goals and inputs may be stored in a database (database 118) for the integrated data optimization system 112. In some embodiments, the client may be the first sub-system 101 (e.g., a merchant) or an entity associated with the first sub-system 101. In some embodiments, the client goals and inputs may be set based on the industry of the first sub-system 101 or an entity associated with the first sub-system 101.

In some embodiments, some of the client goals and inputs may have multiple or different priorities (e.g., specific time period, specific transaction type). For example, a first client goal and input may be applicable only for a specific time period, and a second client goal and input may target only specific type of transactions.

In some embodiments, the integrated data optimization system 112 (e.g., intelligent orchestration module 113) may generate a set of rules using the one or more outcomes from the machine learning engine 115. For example, all or some of the functions performed by the integrated data optimization system 112 as discussed in the present disclosure may be provided, for example, as a set of rules. The weight value/priority of data in a given situation (e.g., depending on the type of the tasks or client goals) may be predetermined in the set of rules, which is generated based on a set of training data input into the machine learning engine 115.

In some embodiments, the set of rules may also include one or more predetermined threshold values (e.g., predetermined threshold value for the probability of approval of the electronic message, probability of a chargeback, probability of fraud, value of the electronic message, latency in communicating the electronic message within a network system, transaction cost, network cost, etc.). In some embodiments, the predetermined threshold values may be different depending on the type of tasks and/or the input client goals. For example, when the specific task is the fraud detection task, the predetermined threshold value for the probability of fraud is set as 50%, 60%, 70%, 80%, or 90%. If the integrated data optimization system 112 determines that the probability of fraud is greater than the predetermined threshold value, the integrated data optimization system 112 may decline the electronic message, for example, based on this determination alone. In some embodiments, the predetermined threshold values may be set by the input client goals.

If the integrated data optimization system 112 determines that the probability of fraud is less than the predetermined threshold value, the integrated data optimization system 112 may consider other rules/factors/data. For example, the predetermined threshold value for the probability of chargeback may be set as 50%, 60%, 70%, 80%, or 90%. In some embodiments, if the integrated data optimization system 112 determines that the probability of chargeback is greater than the predetermined threshold value, the integrated data optimization system 112 may decline the electronic message, or require additional credential authentication. If the integrated data optimization system 112 determines that the probability of chargeback is equal to or less than the predetermined threshold value, the integrated data optimization system 112 may determine not to require additional credential authentication.

The predetermined threshold value for the probability of authorization may be set as 50%, 60%, 70%, 80%, or 90%, for example. In some embodiments, if the integrated data optimization system 112 determines that the probability of chargeback is greater than the predetermined threshold value, the integrated data optimization system 112 may decline the electronic message, or require additional credential authentication. If the integrated data optimization system 112 determines that the probability of chargeback is equal to or less than the predetermined threshold value, the integrated data optimization system 112 may determine not to require additional credential authentication.

In some examples, the risk of fraud may be classified into multiple categories, such as high risk (e.g., probability of fraud being equal to or greater than a first predetermined threshold), medium risk (e.g., probability of fraud being lower than the first predetermined threshold but equal to or greater than a second predetermined threshold), or low risk (e.g., probability of fraud being lower than the second predetermined threshold). In some examples, other threshold values may vary depending on the level of the fraud risk. For example, when the fraud risk is classified as high and/or medium risk, the predetermined threshold value for the probability of chargeback may be decreased by a predetermined amount (e.g., 10%, 20%, or 30%).

In some embodiments, the integrated data optimization system 112 may implement multiple tasks (e.g., at least two of the fraud detection task, chargeback fraud detection task, refund task, authorization task, and authentication task) at the same time or sequentially to assess the overall risks and costs associated with the electronic message. For example, when a new electronic message is received, the integrated data optimization system 112 may perform the fraud detection task as a first task, the chargeback fraud detection task as a second task, the refund task as a third task, the authorization task as a fourth task, and the authentication task as a fifth task. The order of the tasks to be implemented may be changed depending on the types of the electronic message, data related to the electronic message, and/or customer goals. In some embodiments, some of the tasks (e.g., fraud detection task and chargeback fraud detection task) may be essential and must be implemented for all or certain groups of electronic messages. In some other embodiments, some or all of the tasks are optional.

In some embodiments, whether to implement some of the tasks may be dependent on the results of the other tasks that have been implemented first. For example, if the integrated data optimization system 112 determines that the probability of fraud for an electronic message is greater than a predetermined threshold value, the integrated data optimization system 112 may decline the electronic message without implementing other (remaining) tasks.

In some embodiments, the determination of one or more factors (e.g., probability of fraud, likelihood of authorization, likelihood of authentication) by the integrated data optimization system 112 (e.g., intelligent orchestration 113 or machine learning engine 115) may affect the determination of other factors or implementation/results of other tasks. For example, when it is determined that the fraud risk is high, the set of rules may require that the electronic message be authenticated. The use of authentication may have an impact on the determination of the likelihood of authorization. In some embodiments, once authentication of the electronic message is required, the set of rules may not route the transaction by a PIN-less network.

In some embodiments, the analysis of the request for the electronic message may include applying the set of rules to the request/electronic message. In some embodiments, the set of rules may include a plurality of subset-rules for each of one or more tasks. For example, the set of rules may include a first subset rule for the

fraud detection task, a second subset rule for the chargeback fraud detection task, a third subset rule for the refund task, a fourth subset rule for the authorization task, and a fifth subset rule for the authentication task. Some or all of these sub-set rules may be applied to the request/electronic message at the same time or sequentially. The set of rules may be stored in a database for the intelligent orchestration module 113 or the machine learning engine 115.

In some embodiments, the integrated data optimization system 112 (e.g., intelligent orchestration module 113) may update the set of rules by training the machine learning engine 115 based on a new set of training data from one or more of the platforms in the platform cluster 120. Then, the integrated data optimization system 112 (e.g., machine learning engine 115) may generate one or more new outcomes based on the new set of training data. In some embodiments, the set of rules may be updated at a predetermined time interval (e.g., daily, weekly, monthly, quarterly, and yearly). In other embodiments, the set of rules may be updated randomly or per a predetermined configuration. When the set of rules are updated, the weight values and/or the predetermined threshold values may be updated. In some embodiments, the set of rules may be updated in real-time (e.g., right after the processing of a current electronic message is completed) or after a predetermined amount of time after the processing of a current electronic message is completed.

In some embodiments, the integrated data optimization system 112 and/or the machine learning engine 115 may analyze the request in the electronic message and initially output a set number of possible combinations of paths through which the electronic message can be processed, for example, based on the analysis of the request and/or the implementation of the tasks. In some embodiments, one or more of the combinations of the paths may be optimized for different goals (e.g., client goals and inputs). For example, a first combination of the paths may be optimized for a minimum cost, a second combination of the paths may be optimized for a maximum authorization, a third combination of the paths may be optimized for higher security, and a fourth combination of the paths may be optimized for delivery times.

In some embodiments, the integrated data optimization system 112 may choose the path that is optimized for the set goal (e.g., client goals and inputs). For example, when the client goal is to minimize the cost, the integrated data optimization system 112 may choose the first combination of the paths among various combinations of the paths.

In some embodiments, when considering/predicting the cost of the electronic message, the integrated data optimization system 112 and/or the machine learning engine 115 may analyze not only the cost across the entire lifecycle (e.g., entire processing path) of the electronic message, but also the probability of various other factors (e.g., probability of a fraudulent chargeback, likelihood of a return, likelihood of authorization).

In some embodiments, the integrated data optimization system 112 and/or the machine learning engine 115 may override an optimal path and choose a sub-optimal path based on the client goals and inputs. For example, when the client goals and inputs are transmitting a first predetermined amount of electronic messages to a specific payment network, for example, to decrease the overall network fees, the integrated data optimization system 112 and/or the machine learning engine 115 may choose to transmit at least some portions of electronic messages to the specific payment network, even if it might be a sub-optimal path.

In this case, the integrated data optimization system 112 and/or the machine learning engine 115 may analyze/predict/determine first volume of transactions that may be transmitted to the specific payment network as an optimal path. Then, the integrated data optimization system 112 and/or the machine learning engine 115 may determine whether the first predetermined amount of electronic messages in the client goals and inputs is greater than the first volume of transactions that may/would be transmitted to the specific payment network as an optimal path.

Responsive to determining that the first predetermined amount of electronic messages (e.g., 10M) in the client goals and inputs is greater than the first volume of transactions (e.g., 8M) that may/would be transmitted to the specific payment network as an optimal path, the integrated data optimization system 112 and/or the machine learning engine 115 may determine to transmit a difference (e.g., 2M) between the first predetermined amount of electronic messages in the client goals and inputs (10M) and the first volume of transactions to the specific payment network (e.g., 8M) as a sub-optimal path. When the first predetermined amount of electronic messages in the client goals and inputs is not greater than the first volume of transactions that may/would be transmitted to the specific payment network as an optimal path, the integrated data optimization system 112 and/or the machine learning engine 115 may not transmit any additional electronic messages (e.g., more than the first volume of transactions that may/would be transmitted to the specific payment network) to the specific payment network as a sub-optimal path (unless it is determined to be an optimal path).

In some embodiments, the integrated data optimization system 112 and/or the machine learning engine 115 may determine a plurality of possible combination of tasks for processing the electronic message based on the analysis of the request. In this process, the integrated data optimization system 112 and/or the machine learning engine 115 may enable certain options/tasks while disabling other options/tasks. For example, the integrated data optimization system 112 and/or the machine learning engine 115 may enable one or more options/tasks (e.g., fraud detection task and authorization task) while disabling other options/tasks (e.g., chargeback fraud detection task, refund task, authentication task).

The integrated data optimization system 112 and/or the machine learning engine 115 may also determine an optimal combination of tasks among the possible combination of tasks. Then, the integrated data optimization system 112 and/or the machine learning engine 115 may transmit the electronic transaction via the optimized/optimal path using the optimal combination of tasks. In some embodiments, the integrated data optimization system 112 and/or the machine learning engine 115 may transmit the electronic transaction via the sub-optimized/optimal path using the optimal combination of tasks based on the client goals and inputs.

The above presented modules and components of the integrated data optimization system 112 may be implemented in hardware, firmware, software, or a combination thereof. Though depicted as a separate entity in FIG. 1, it is contemplated that the integrated data optimization system 112 may be also implemented for direct operation by the first sub-system 101, the access device 103, the second sub-system 105 (e.g., acquirer sub-system), and the third sub-system 107 (e.g., the issuer sub-system). As such, the integrated data optimization system 112 may generate direct signal inputs by way of the operating system of the first sub-system 101, the access device 103, the second sub-system 105, and/or the third sub-system 107. In another embodiment, one or more of the modules 113-119 may be implemented for operation by the first sub-system 101, the access device 103, the second sub-system 105, and/or the third sub-system 107, as the integrated data optimization system 112. The various executions presented herein contemplate any and all arrangements and models.

By way of example, the first sub-system 101, the access device 103, the second sub-system 105 (e.g., acquirer sub-system), the third sub-system 107 (e.g., the issuer sub-system), and the integrated data optimization system 112 may communicate with each other and other components of the communication network 109 using well known, new or still developing protocols. In this context, a protocol includes a set of rules defining how the network nodes within the communication network 109 interact with each other based on information sent over the communication links. The protocols may be effective at different layers of operation within each node, from generating and receiving physical signals of various types, to selecting a link for transferring those signals, to the format of information indicated by those signals, to identifying which software application executing on a computer system sends or receives the information. The conceptually different layers of protocols for exchanging information over a network are described in the Open Systems Interconnection (OSI) Reference Model.

Communications between the network nodes are typically effected by exchanging discrete packets of data. Each packet typically includes (1) header information associated with a particular protocol, and (2) payload information that follows the header information and contains information that may be processed independently of that particular protocol. In some protocols, the packet includes (3) trailer information following the payload and indicating the end of the payload information. The header includes information such as the source of the packet, its destination, the length of the payload, and other properties used by the protocol. Often, the data in the payload for the particular protocol includes a header and payload for a different protocol associated with a different, higher layer of the OSI Reference Model. The header for a particular protocol typically indicates a type for the next protocol contained in its payload. The higher layer protocol is said to be encapsulated in the lower layer protocol. The headers included in a packet traversing multiple heterogeneous networks, such as the Internet, typically include a physical (layer 1) header, a data-link (layer 2) header, an internetwork (layer 3) header and a transport (layer 4) header, and various application (layer 5, layer 6 and layer 7) headers as defined by the OSI Reference Model.

INTEGRATED DATA OPTIMIZATION PROCESSES

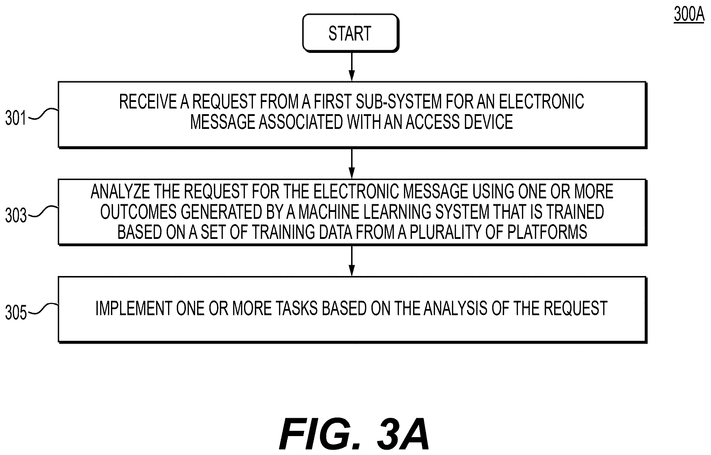

FIG. 3A is a flowchart showing a process for integrated data optimization for processing an electronic message according to an aspect of the present disclosure. In various embodiments, the integrated data optimization system 112 and/or one or more components thereof may perform one or more portions of the process 300A and may be implemented using, for instance, a chip set including a processor and a memory as shown in FIG. 5. As such, the integrated data optimization system 112 and/or any of components thereof may provide means for accomplishing various parts of the process 300A, as well as means for accomplishing embodiments of other processes described herein in conjunction with other components of the system 100. Although the process 300A is illustrated and described as a sequence of steps, it is contemplated that various embodiments of the process 300A are performed in any order or combination, need not include all of the illustrated steps, and may include additional or other steps.

In step 301, the integrated data optimization system 112 may receive a request from a first sub-system 101 (e.g., merchant system) for an electronic message associated with an access device 103 (e.g., user/client device). In one instance, electronic messages may be online transactions (card transaction, payment transaction, etc.) for adding/removing funds from an account for a service. In some embodiments, the electronic message may be a single message transaction (e.g., PIN debit card transactions) or a dual message transaction (e.g., a credit card transaction, a signature-based debit card transaction). In some embodiments, the electronic message may be a card present transaction or a card-not-present transaction or any other transaction type. In step 303, the integrated data optimization system 112 may analyze the request for the electronic message using one or more outcomes generated by the machine learning engine 115 that is trained based on a set of training data from a plurality of platforms (e.g., platforms in the platform cluster 120).

In some embodiments, the analysis of the request may include comparing data and/or various factors from the plurality of platforms in the platform cluster 120 (e.g., comparing data/factor from one platform with another data from the same or another platform). For example, integrated data optimization system 112 may compare the data and/or various factors transmitted/extracted from the platforms of the platform cluster 120. Examples of the data may include any data stored in or available to one or more platforms of the platform cluster 120 (e.g., any data in the profile database, transaction database, and chargeback database of one or more platforms of the platform cluster 120).

In some embodiments, the data and/or various factors that are compared may be provided from at least two of the platforms in the platform cluster 120, such as the authorization optimization platform 121, the fraud detection platform 123, the chargeback detection platform 125, the token optimization platform 127, the refund optimization platform 129, the authentication optimization platform 131, and the PIN suppression platform 133. In some embodiments, the data to be compared may include predictive data generated from one or more of the platforms of the platform cluster 120. For example, the predictive data may include one or more of a probability of approval of the electronic message, a probability of a chargeback, a probability of fraud, a value of the electronic message, and an estimated latency in communicating the electronic message within a network system.

In step 305, the integrated data optimization system 112 may implement (e.g., perform) one or more tasks based on the analysis of the request. The one or more tasks may include at least one of a fraud detection task configured to determine whether the electronic message is indicative of a fraudulent activity; a chargeback fraud detection task configured to determine a likelihood of a chargeback fraud for the electronic message; a refund task configured to determine whether the electronic message corresponds to a chargeback case appropriate for a proactive refund; an authorization task configured to determine whether to authorize the request for the electronic message; and an authentication task configured to determine whether to require an additional authenticating credential (e.g., signature, fingerprint, or pin) to authorize the request for the electronic message.

In some embodiments, the integrated data optimization system 112 and/or the machine learning engine 115 may determine one or more predetermined threshold values (e.g., predetermined threshold value for the probability of approval of the electronic message, probability of a chargeback, probability of fraud, value of the electronic message, latency in communicating the electronic message within a network system, transaction cost, network cost, etc.). In some embodiments, the predetermined threshold values may be different depending on the type of tasks and/or the input client goals.

For example, when the specific task is the fraud detection task, the predetermined threshold value for the probability of fraud is set as 50%, 60%, 70%, 80%, or 90%. If the integrated data optimization system 112 determines that the probability of fraud is greater than the predetermined threshold value, the integrated data optimization system 112 may decline the electronic message, for example, based on this determination alone. In some embodiments, the predetermined threshold values may be set by the input client goals.

If the integrated data optimization system 112 determines that the probability of fraud is less than the predetermined threshold value, the integrated data optimization system 112 may consider other rules/factors/data. For example, the predetermined threshold value for the probability of chargeback may be set as 50%, 60%, 70%, 80%, or 90%. In some embodiments, if the integrated data optimization system 112 determines that the probability of chargeback is greater than the predetermined threshold value, the integrated data optimization system 112 may decline the electronic message, or require additional credential authentication. If the integrated data optimization system 112 determines that the probability of chargeback is equal to or less than the predetermined threshold value, the integrated data optimization system 112 may determine not to require additional credential authentication.

The predetermined threshold value for the probability of authorization may be set as 50%, 60%, 70%, 80%, or 90%. In some embodiments, if the integrated data optimization system 112 determines that the probability of chargeback is greater than the predetermined threshold value, the integrated data optimization system 112 may decline the electronic message, or require additional credential authentication. If the integrated data optimization system 112 determines that the probability of chargeback is equal to or less than the predetermined threshold value, the integrated data optimization system 112 may determine not to require additional credential authentication.

In some examples, the risk of fraud may be classified into multiple categories, such as high risk (e.g., probability of fraud being equal to or greater than a first predetermined threshold), medium risk (e.g., probability of fraud being lower than the first predetermined threshold but equal to or greater than a second predetermined threshold), or low risk (e.g., probability of fraud being lower than the second predetermined threshold). In some examples, other threshold values may vary depending on the level of the fraud risk. For example, when the fraud risk is classified as high and/or medium risk, the predetermined threshold value for the probability of chargeback may be decreased by a predetermined amount (e.g., 10%, 20%, or 30%).

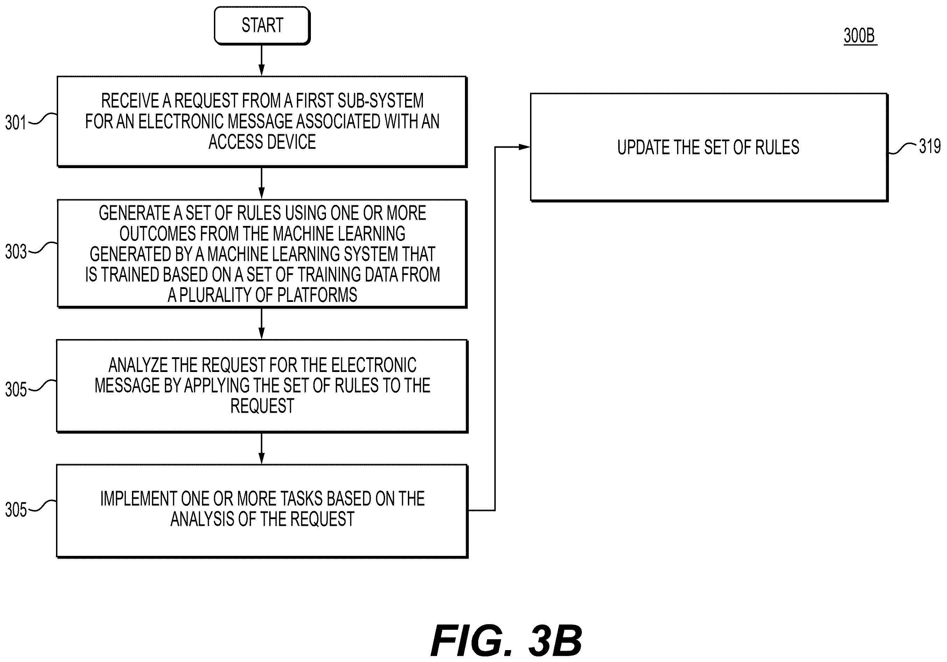

FIG. 3B is a flowchart showing a process for integrated data optimization for processing an electronic message according to another aspect of the present disclosure. In various embodiments, the integrated data optimization system 112 and/or one or more components thereof may perform one or more portions of the process 300B and may be implemented using, for instance, a chipset including a processor and a memory as shown in FIG. 5. As such, the integrated data optimization system 112 and/or any of components thereof may provide means for accomplishing various parts of the process 300B, as well as means for accomplishing embodiments of other processes described herein in conjunction with other components of the system 100. Although the process 300B is illustrated and described as a sequence of steps, it is contemplated that various embodiments of the process 300A are performed in any order or combination, need not include all of the illustrated steps, and may include additional or other steps.

In step 311 the integrated data optimization system 112 may receive a request from a first sub-system 101 (e.g., merchant system) for an electronic message associated with an access device 103 (e.g., user/client device). In step 313, the integrated data optimization system 112 may generate a set of rules using one or more outcomes from the machine learning engine 115 that is trained based on a set of training data from the platforms of the platform cluster 120. For example, all or some of the functions performed by the integrated data optimization system 112 as discussed in the present disclosure may be provided, for example, as a set of rules.

In step 315, the integrated data optimization system 112 may analyze the request for the electronic message by applying the set of rules to the request. In some embodiments, the set of rules may include one or more weight values/priority of data, for example in a given situation (e.g., depending on the type of the tasks or client goals). The weight value/priority of data in the set of rules may be predetermined using a set of training data input into the machine learning engine 115.

In some embodiments, the set of rules may also include one or more predetermined threshold values (e.g., predetermined threshold value for the probability of approval of the electronic message, probability of a chargeback, probability of fraud, value of the electronic message, latency in communicating the electronic message within a network system).

In some embodiments, the predetermined threshold values change depending on the type of tasks and/or the input client goals. For example, when the specific task is the fraud detection task, the predetermined threshold value for the probability of fraud is set as 50%, 60%, 70%, 80%, or 90%. If the integrated data optimization system 112 determines that the probability of fraud is greater than the predetermined threshold value, the integrated data optimization system 112 may decline the electronic message, for example, based on this determination alone. In some embodiments, the predetermined threshold values may be set by the input client goals.

If the integrated data optimization system 112 determines that the probability of fraud is less than the predetermined threshold value, the integrated data optimization system 112 may consider other rules/factors/data. For example, the predetermined threshold value for the probability of chargeback may be set as 50%, 60%, 70%, 80%, or 90%. In some embodiments, if the integrated data optimization system 112 determines that the probability of chargeback is greater than the predetermined threshold value, the integrated data optimization system 112 may decline the electronic message, or require additional credential authentication. If the integrated data optimization system 112 determines that the probability of chargeback is equal to or less than the predetermined threshold value, the integrated data optimization system 112 may determine not to require additional credential authentication.

The predetermined threshold value for the probability of authorization may be set as 50%, 60%, 70%, 80%, or 90%. In some embodiments, if the integrated data optimization system 112 determines that the probability of chargeback is greater than the predetermined threshold value, the integrated data optimization system 112 may decline the electronic message, or require additional credential authentication. If the integrated data optimization system 112 determines that the probability of chargeback is equal to or less than the predetermined threshold value, the integrated data optimization system 112 may determine not to require additional credential authentication.

In some embodiments, the set of rules may include a plurality of subset-rules for each of one or more tasks. For example, the set of rules may include a first subset rule for the fraud detection task, a second subset rule for the chargeback fraud detection task, a third subset rule for the refund task, a fourth subset rule for the authorization task, and a fifth subset rule for the authentication task. Some or all of these sub-set rules may be applied to the request/electronic message at the same time or sequentially. The set of rules may be stored in a database for the intelligent orchestration module 113 or the machine learning engine 115.

In step 317, the integrated data optimization system 112 may implement one or more tasks based on the analysis of the request. The one or more tasks may include at least one of a fraud detection task configured to determine whether the electronic message is indicative of a fraudulent activity; a chargeback fraud detection task configured to determine a likelihood of a chargeback fraud for the electronic message; a refund task configured to determine whether the electronic message corresponds to a chargeback case appropriate for a proactive refund; an authorization task configured to determine whether to authorize the request for the electronic message; and an authentication task configured to determine whether to require an additional authenticating credential (e.g., signature, fingerprint, or pin) to authorize the request for the electronic message.

In step 319, the integrated data optimization system 112 may update the set of rules. For example, the integrated data optimization system 112 (e.g., intelligent orchestration module 113) may update the set of rules by training the machine learning engine 115 based on a new set of training data from one or more of the platforms in the platform cluster 120. Then, the integrated data optimization system 112 (e.g., machine learning engine 115) may generate one or more new outcomes based on the new set of training data. In some embodiments, the set of rules may be updated at a predetermined time interval (e.g., daily, weekly, monthly, quarterly, and yearly), randomly, or per a predetermined configuration. When the set of rules are updated, the weight values and/or the predetermined threshold values may be updated.

In some embodiments, the determination of one or more factors (e.g., fraud risk, likelihood of authorization, likelihood of authentication) by the integrated data optimization system 112 (e.g., intelligent orchestration 113 or machine learning engine 115) may affect the determination of other factors or implementation/results of other tasks. For example, when it is determined that the fraud risk is high, the set of rules may require that the electronic message be authenticated. The use of authentication may have an impact on the determination of the likelihood of authorization. In some embodiments, once authentication of the electronic message is required, the set of rules may not route the transaction by a PIN-less network.

The steps illustrated in Fig. 3A and/or Fig. 3B may be implemented by systems other than those shown and/or discussed in the present application (e.g., any system including additional, fewer, or different processors or components).

MACHINE LEARNING TRAINING

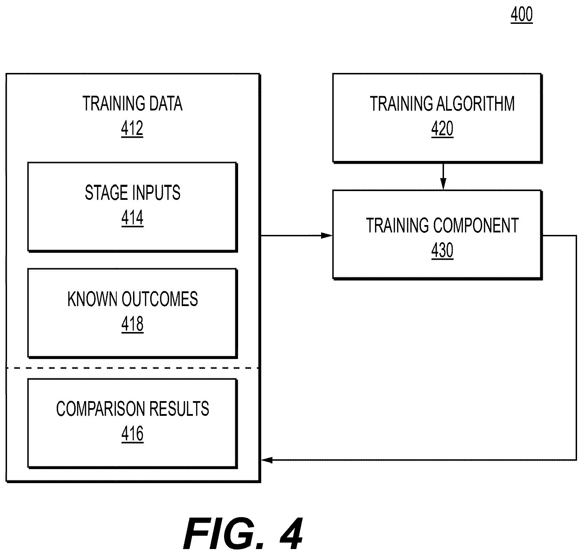

One or more implementations disclosed herein include and/or are implemented using a machine learning model. For example, one or more of the modules of the platforms of the platform cluster 120 and/or the integrated data optimization system 112 (e.g., machine learning engine 115) may be implemented using a machine learning model and/or are used to train the machine learning model. A given machine learning model may be trained using the training flow chart 400 of FIG. 4. Training data 412 may include one or more of stage inputs 414 and known outcomes 418 related to the machine learning model to be trained. Stage inputs 414 may be from any applicable source including text, visual representations, data, values, comparisons, and stage outputs, e.g., one or more outputs from one or more steps from FIG. 3A or 3B. The known outcomes 418 are included for the machine learning models generated based on supervised or semi-supervised training. An unsupervised machine learning model may not be trained using known outcomes 418. Known outcomes 418 may include known or desired outputs for future inputs similar to or in the same category as stage inputs 414 that do not have corresponding known outputs.

The training data 412 and a training algorithm 420, e.g., one or more of the modules implemented using the machine learning model and/or may be used to train the machine learning model, may be provided to a training component 430 that applies the training data 412 to the training algorithm 420 to generate the machine learning model. According to an implementation, the training component 430 may be provided with comparison results 416 that compare a previous output of the corresponding machine learning model to apply the previous result to re-train the machine learning model. The comparison results 416 may be used by training component 430 to update the corresponding machine learning model. The training algorithm 420 may utilize machine learning networks and/or models including, but not limited to a deep learning network such as Deep Neural Networks (DNN), Convolutional Neural Networks (CNN), Fully Convolutional Networks (FCN) and Recurrent Neural Networks (RCN), probabilistic models such as Bayesian Networks and Graphical Models, classifiers such as K-Nearest Neighbors, and/or discriminative models such as Decision Forests and maximum margin methods, the model specifically discussed herein, or the like.

The machine learning model used herein may be trained and/or used by adjusting one or more weights and/or one or more layers of the machine learning model. For example, during training, a given weight may be adjusted (e.g., increased, decreased, removed) based on training data or input data. Similarly, a layer may be updated, added, or removed based on training data/and or input data. The resulting outputs may be adjusted based on the adjusted weights and/or layers.

In general, any process or operation discussed in this disclosure may be understood to be computer-implementable, such as the processes illustrated in FIG. 3A and/or 3B are performed by one or more processors of a computer system as described herein. A process or process step performed by one or more processors may be also referred to as an operation. The one or more processors may be configured to perform such processes by having access to instructions (e.g., software or computer-readable code) that, when executed by one or more processors, cause one or more processors to perform the processes. The instructions may be stored in a memory of the computer system. A processor may be a central processing unit (CPU), a graphics processing unit (GPU), or any suitable type of processing unit.

A computer system, such as a system or device implementing a process or operation in the examples above, may include one or more computing devices. One or more processors of a computer system may be included in a single computing device or distributed among a plurality of computing devices. One or more processors of a computer system may be connected to a data storage device. A memory of the computer system may include the respective memory of each computing device of the plurality of computing devices.

Unless specifically stated otherwise, as apparent from the following discussions, it is appreciated that throughout the specification, discussions utilizing terms such as "processing," "computing," "calculating," "determining", analyzing" or the like, refer to the action and/or processes of a computer or computing system, or similar electronic computing device, that manipulate and/or transform data represented as physical, such as electronic, quantities into other data similarly represented as physical quantities.

In a similar manner, the term "processor" refers to any device or portion of a device that processes electronic data, e.g., from registers and/or memory to transform that electronic data into other electronic data that, e.g., is stored in registers and/or memory. A "computer," a "computing machine," a "computing platform," a "computing device," or a "server" includes one or more processors.

COMPUTER SYSTEM

FIG. 5 illustrates an implementation of a computer system that executes techniques presented herein. The computer system 500 includes a set of instructions which is executed to cause the computer system 500 to perform any one or more of the methods or computer based functions disclosed herein. The computer system 500 operates as a standalone device or is connected, e.g., using a network, to other computer systems or peripheral devices.

In a networked deployment, the computer system 500 operates in the capacity of a server or as a client user computer in a server-client user network environment, or as a peer computer system in a peer-to-peer (or distributed) network environment. The computer system 500 is also implemented as or incorporated into various devices, such as a personal computer (PC), a tablet PC, a set-top box (STB), a personal digital assistant (PDA), a mobile device, a palmtop computer, a laptop computer, a desktop computer, a communications device, a wireless telephone, a land-line telephone, a control system, a camera, a scanner, a facsimile machine, a printer, a pager, a personal trusted device, a web appliance, a network router, switch or bridge, or any other machine capable of executing a set of instructions (sequential or otherwise) that specify actions to be taken by that machine. In a particular implementation, the computer system 500 is implemented using electronic devices that provide voice, video, or data communication. Further, while the computer system 500 is illustrated as a single system, the term "system" shall also be taken to include any collection of systems or sub-systems that individually or jointly execute a set, or multiple sets, of instructions to perform one or more computer functions.

As illustrated in FIG. 5, the computer system 500 includes a processor 502, e.g., a central processing unit (CPU), a graphics processing unit (GPU), or both. The processor 502 is a component in a variety of systems. For example, the processor 502 is part of a standard personal computer or a workstation. The processor 502 is one or more processors, digital signal processors, application specific integrated circuits, field programmable gate arrays, servers, networks, digital circuits, analog circuits, combinations thereof, or other now known or later developed devices for analyzing and processing data. The processor 502 implements a software program, such as code generated manually (i.e., programmed).

The computer system 500 includes a memory 504 that communicates via bus 508. Memory 504 is a main memory, a static memory, or a dynamic memory. Memory 504 includes, but is not limited to computer-readable storage media such as various types of volatile and non-volatile storage media, including but not limited to random access memory, read-only memory, programmable read-only memory, electrically programmable read-only memory, electrically erasable read-only memory, flash memory, magnetic tape or disk, optical media and the like. In one implementation, the memory 504 includes a cache or random-access memory for the processor 502. In alternative implementations, the memory 504 is separate from the processor 502, such as a cache memory of a processor, the system memory, or other memory. Memory 504 is an external storage device or database for storing data. Examples include a hard drive, compact disc ("CD"), digital video disc ("DVD"), memory card, memory stick, floppy disc, universal serial bus ("USB") memory device, or any other device operative to store data. The memory 504 is operable to store instructions executable by the processor 502. The functions, acts, or tasks illustrated in the figures or described herein are performed by processor 502 executing the instructions stored in memory 504. The functions, acts, or tasks are independent of the particular type of instruction set, storage media, processor, or processing strategy and are performed by software, hardware, integrated circuits, firmware, micro-code, and the like, operating alone or in combination. Likewise, processing strategies include multiprocessing, multitasking, parallel processing, and the like.

As shown, the computer system 500 further includes a display 510, such as a liquid crystal display (LCD), an organic light emitting diode (OLED), a flat panel display, a solid-state display, a cathode ray tube (CRT), a projector, a printer or other now known or later developed display device for outputting determined information. The display 510 acts as an interface for the user to see the functioning of the processor 502, or specifically as an interface with the software stored in the memory 504 or in the drive unit 506.

Additionally or alternatively, the computer system 500 includes a user input/output device 512 configured to allow a user to interact with any of the components of the computer system 500. The user input/output device 512 is a number pad, a keyboard, a cursor control device, such as a mouse, a joystick, touch screen display, remote control, or any other device operative to interact with the computer system 500.

The computer system 500 also includes the drive unit 506 implemented as a disk or optical drive. The drive unit 506 includes a computer-readable medium 522 in which one or more sets of instructions 524, e.g. software, is embedded. Further, the sets of instructions 524 embodies one or more of the methods or logic as described herein. The sets of instructions 524 resides completely or partially within memory 504 and/or within processor 502 during execution by the computer system 500. The memory 504 and the processor 502 also include computer-readable media as discussed above.

In some systems, computer-readable medium 522 includes the set of instructions 524 or receives and executes the set of instructions 524 responsive to a propagated signal so that a device connected to network 530 communicates voice, video, audio, images, or any other data over network 530. Further, the sets of instructions 524 are transmitted or received over the network 530 via the communication port or interface 520, and/or using the bus 508. The communication port or interface 520 is a part of the processor 502 or is a separate component. The communication port or interface 520 is created in software or is a physical connection in hardware. The communication port or interface 520 is configured to connect with the network 530, external media, display 510, or any other components in the computer system 500, or combinations thereof. The connection with network 530 is a physical connection, such as a wired Ethernet connection, or is established wirelessly as discussed below. Likewise, the additional connections with other components of the computer system 500 are physical connections or are established wirelessly. Network 530 alternatively be directly connected to the bus 508.

While the computer-readable medium 522 is shown to be a single medium, the term "computer-readable medium" includes a single medium or multiple media, such as a centralized or distributed database, and/or associated caches and servers that store one or more sets of instructions. The term "computer-readable medium" also includes any medium that is capable of storing, encoding, or carrying a set of instructions for execution by a processor or that causes a computer system to perform any one or more of the methods or operations disclosed herein. The computer-readable medium 522 is non-transitory, and may be tangible.

The computer-readable medium 522 includes a solid-state memory such as a memory card or other package that houses one or more non-volatile read-only memories. The computer-readable medium 522 is a random-access memory or other volatile re-writable memory. Additionally or alternatively, the computer-readable medium 522 includes a magneto-optical or optical medium, such as a disk or tapes or other storage device to capture carrier wave signals such as a signal communicated over a transmission medium. A digital file attachment to an e-mail or other self-contained information archive or set of archives is considered a distribution medium that is a tangible storage medium. Accordingly, the disclosure is considered to include any one or more of a computer-readable medium or a distribution medium and other equivalents and successor media, in which data or instructions are stored.

In an alternative implementation, dedicated hardware implementations, such as application specific integrated circuits, programmable logic arrays, and other hardware devices, is constructed to implement one or more of the methods described herein. Applications that include the apparatus and systems of various implementations broadly include a variety of electronic and computer systems. One or more implementations described herein implement functions using two or more specific interconnected hardware modules or devices with related control and data signals that are communicated between and through the modules, or as portions of an application-specific integrated circuit. Accordingly, the present system encompasses software, firmware, and hardware implementations.

Computer system 500 is connected to network 530. Network 530 defines one or more networks including wired or wireless networks. The wireless network is a cellular telephone network, an 802.10, 802.16, 802.20, or WiMAX network. Further, such networks include a public network, such as the Internet, a private network, such as an intranet, or combinations thereof, and utilizes a variety of networking protocols now available or later developed including, but not limited to TCP/IP based networking protocols. Network 530 includes wide area networks (WAN), such as the Internet, local area networks (LAN), campus area networks, metropolitan area networks, a direct connection such as through a Universal Serial Bus (USB) port, or any other networks that allows for data communication. Network 530 is configured to couple one computing device to another computing device to enable communication of data between the devices. Network 530 is generally enabled to employ any form of machine-readable media for communicating information from one device to another. Network 530 includes communication methods by which information travels between computing devices. Network 530 is divided into sub-networks. The sub-networks allow access to all of the other components connected thereto or the sub-networks restrict access between the components. Network 530 is regarded as a public or private network connection and includes, for example, a virtual private network or an encryption or other security mechanism employed over the public Internet, or the like.

In accordance with various implementations of the present disclosure, the methods described herein are implemented by software programs executable by a computer system. Further, in an example, non-limited implementation, implementations can include distributed processing, component/object distributed processing, and parallel processing. Alternatively, virtual computer system processing can be constructed to implement one or more of the methods or functionality as described herein.

Although the present specification describes components and functions that are implemented in particular implementations with reference to particular standards and protocols, the disclosure is not limited to such standards and protocols. For example, standards for Internet and other packet switched network transmission (e.g., TCP/IP, UDP/IP, HTML, HTTP) represent examples of the state of the art. Such standards are periodically superseded by faster or more efficient equivalents having essentially the same functions. Accordingly, replacement standards and protocols having the same or similar functions as those disclosed herein are considered equivalents thereof.

It will be understood that the steps of methods discussed are performed in one embodiment by an appropriate processor (or processors) of a processing (i.e., computer) system executing instructions (computer-readable code) stored in storage. It will also be understood that the disclosure is not limited to any particular implementation or programming technique and that the disclosure is implemented using any appropriate techniques for implementing the functionality described herein. The disclosure is not limited to any particular programming language or operating system.

It should be appreciated that in the above description of example embodiments of the present disclosure, various features are sometimes grouped together in a single embodiment, figure, or description thereof for the purpose of streamlining the disclosure and aiding in the understanding of one or more of the various inventive aspects. This method of the present disclosure, however, is not to be interpreted as reflecting an intention that the claimed embodiments require more features than are expressly recited in each claim. Rather, as the following claims reflect, inventive aspects lie in less than all features of a single foregoing disclosed embodiment. Thus, the claims following the Detailed Description are hereby expressly incorporated into this Detailed Description, with each claim standing on its own as a separate embodiment of the present disclosure.

Furthermore, while some embodiments described herein include some but not other features included in other embodiments, combinations of features of different embodiments are meant to be within the scope of the present disclosure, and form different embodiments, as would be understood by those skilled in the art. For example, in the following claims, any of the claimed embodiments can be used in any combination.

Furthermore, some of the embodiments are described herein as a method or combination of elements of a method that can be implemented by a processor of a computer system or by other means of carrying out the function. Thus, a processor with the necessary instructions for carrying out such a method or element of a method forms a means for carrying out the method or element of a method. Furthermore, an element described herein of an apparatus embodiment is an example of a means for carrying out the function performed by the element for the purpose of carrying out the present disclosure.

In the description provided herein, numerous specific details are set forth. However, it is understood that embodiments of the present disclosure are practiced without these specific details. In other instances, well-known methods, structures and techniques have not been shown in detail in order not to obscure an understanding of this description.

Thus, while there has been described what are believed to be the preferred embodiments of the present disclosure, those skilled in the art will recognize that other and further modifications are made thereto without departing from the spirit of the present disclosure, and it is intended to claim all such changes and modifications as falling within the scope of the present disclosure. For example, any formulas given above are merely representative of procedures that may be used. Functionality may be added or deleted from the block diagrams and operations may be interchanged among functional blocks. Steps may be added or deleted to methods described within the scope of the present disclosure.

The above disclosed subject matter is to be considered illustrative, and not restrictive, and the appended claims are intended to cover all such modifications, enhancements, and other implementations, which fall within the true spirit and scope of the present disclosure. Thus, to the maximum extent allowed by law, the scope of the present disclosure is to be determined by the broadest permissible interpretation of the following claims and their equivalents, and shall not be restricted or limited by the foregoing detailed description. While various implementations of the disclosure have been described, it will be apparent to those of ordinary skill in the art that many more implementations and implementations are possible within the scope of the disclosure. Accordingly, the disclosure is not to be restricted except in light of the attached claims and their equivalents.

All patents, patent applications, publications, or other disclosure material mentioned herein, are hereby incorporated by reference in their entirety as if each individual reference was expressly incorporated by reference respectively. All references, and any material, or portion thereof, that are said to be incorporated by reference herein are incorporated herein only to the extent that the incorporated material does not conflict with existing definitions, statements, or other disclosure material set forth in this disclosure. As such, and to the extent necessary, the disclosure as set forth herein supersedes any conflicting material incorporated herein by reference and the disclosure expressly set forth in the present application controls.

EXAMPLES

The present disclosure furthermore relates to the following aspects.

Example 1. A computer-implemented method comprising: receiving, by one or more processors, a request from a first system for an electronic transaction; analyzing, by the one or more processors, the request for the electronic transaction using one or more outcomes generated by a machine learning system that is trained based on a set of randomized training data processed using a plurality platforms, wherein the analysis of the request comprises comparing data from the plurality of platforms, wherein the compared data from the plurality of platforms comprise outcomes from the plurality of platforms, wherein an outcome from one platform among the plurality of platforms affect an outcome from another platform among the plurality of platforms; determining, by the one or more processors, a plurality of possible combinations of paths for processing the electronic transaction based on the analysis of the request; determining, by the one or more processors, a plurality of possible combination of tasks for processing the electronic transaction based on the analysis of the request; determining, by the one or more processors, an optimized path among the plurality of possible combinations of paths; determining, by the one or more processors, an optimal combination of tasks among the possible combination of tasks; and transmitting, by the one or more processors, the electronic transaction via the optimized path using the optimal combination of tasks.

Example 2. The computer-implemented method of example 1, wherein the plurality of platforms comprise at least two of: a fraud detection platform configured to detect a fraudulent activity, a refund optimization platform configured to optimize a refund process, an authorization optimization platform configured to optimize an authorization process, an authentication optimization platform configured to optimize an authentication process, a chargeback detection platform configured to detect a chargeback fraud, a token optimization platform configured to optimize a tokenization process, and a PIN suppression platform configured to handle a PIN associated electronic transaction.

Example 3. The computer-implemented method of example 1, wherein the data to be compared comprise predictive data generated from the plurality of platforms, wherein the predictive data is at least one of a probability of approval of the electronic transaction, a probability of a chargeback, a probability of fraud, a value of the electronic transaction, an estimated latency in communicating the electronic transaction within a network system.

Example 4. The computer-implemented method of example 1, wherein the analyzing further comprises: assessing, for a specific task, the data from the plurality of platforms; and determining a priority of the data for the specific task based on the assessment.

Example 5. The computer-implemented method of example 4, comprising determining that the specific task is the fraud detection task, and prioritizing data from a fraud detection platform over data from other platforms.

Example 6. The computer-implemented method of example 1, further comprising generating a set of rules using the one or more outcomes from the machine learning, wherein analyzing the request for the electronic transaction comprises applying the set of rules to the request by assessing the electronic transaction based on one or more predetermined threshold values in the set of rules.

Example 7. The computer-implemented method of example 6, wherein the set of rules includes a plurality of subset-rules for each of one or more tasks, wherein the plurality of subset-rules comprise a first subset rule for a fraud detection task and a second subset rule for a chargeback fraud detection task, wherein the first subset rule is different from the second subset rule.

Example 8. The computer-implemented method of example 6, further comprising updating the set of rules by: training the machine learning system based on a new set of training data from the plurality of platforms; generating one or more new outcomes based on the new set of training data; and generating a new set of rules based on the one or more new outcomes.

Example 9. The computer-implemented method of example 8, wherein the set of rules are updated at a predetermined time interval.

Example 10. The computer-implemented method of example 1, further comprising implementing, by the one or more processors, one or more tasks based on the analysis of the request, wherein the one or more tasks comprise at least one of: a fraud detection task configured to determine whether the electronic transaction is indicative of a fraudulent activity, wherein the fraud detection task comprises determining whether a probability of fraud for the electronic transaction is greater than a predetermined threshold fraud value; a chargeback fraud detection task configured to determine a likelihood of a chargeback fraud for the electronic transaction, wherein the chargeback fraud detection task comprises determining whether the likelihood of a chargeback fraud is greater than a predetermined threshold chargeback fraud value; an authorization task configured to determine whether to authorize the request for the electronic transaction; an authentication task configured to determine whether to require an additional authenticating credential to authorize the request for the electronic transaction, wherein the fraud detection task is implemented before the chargeback fraud detection task, authorization task, and the authentication task; and a refund task configured to determine whether the electronic transaction corresponds to a chargeback case appropriate for a proactive refund.

Example 11. A system comprising: one or more processors of a computing system; and at least one non-transitory computer readable medium storing instructions which, when executed by the one or more processors, cause the one or more processors to perform operations comprising: receiving a request from a first system for an electronic transaction; analyzing the request for the electronic transaction using one or more outcomes generated by a machine learning system that is trained based on a set of randomized training data processed using a plurality of platforms, wherein the analysis of the request comprises comparing data from the plurality of platforms, wherein an outcome from one platform among the plurality of platforms affect an outcome from another platform among the plurality of platforms; determining, by the one or more processors, a plurality of possible combinations of paths for processing the electronic transaction based on the analysis of the request; determining, by the one or more processors, a plurality of possible combination of tasks for processing the electronic transaction based on the analysis of the request; determining, by the one or more processors, an optimized path among the plurality of possible combinations of paths; determining, by the one or more processors, an optimal combination of tasks among the possible combination of tasks; and transmitting, by the one or more processors, the electronic transaction via the optimized path using the optimal combination of tasks.

Example 12. The system of example 11, wherein the plurality of platforms comprise at least two of: a fraud detection platform configured to detect a fraudulent activity, a refund optimization platform configured to optimize a refund process, an authorization optimization platform configured to optimize an authorization process, an authentication optimization platform configured to optimize an authentication process, a chargeback detection platform configured to detect a chargeback fraud, a token optimization platform configured to optimize a tokenization process, and a PIN suppression platform configured to handle a PIN associated electronic transaction .

Example 13. The system of example 11, wherein the data to be compared comprise predictive data generated from the plurality of platforms, wherein the predictive data is at least one of a probability of approval of the electronic transaction, a probability of a chargeback, a probability of fraud, a value of the electronic transaction, an estimated latency in communicating the electronic transaction within a network system.

Example 14. The system of example 11, wherein the analyzing further comprises: assessing, for a specific task, the data from the plurality of platforms; and determining a priority of the data for the specific task based on the assessment.

Example 15. The system of example 14, wherein when the specific task is the fraud detection task, data from a fraud detection platform is prioritized over data from other platforms.

Example 16. The system of example 11, wherein the at least one non-transitory computer readable medium stores instructions which, when executed by the one or more processors, cause the one or more processors to perform operations comprising: generating a set of rules using the one or more outcomes from the machine learning, wherein analyzing the request for the electronic transaction comprises applying the set of rules to the request by assessing the electronic transaction based on one or more predetermined threshold values in the set of rules.

Example 17. The system example 16, wherein the set of rules includes a plurality of subset-rules for each of one or more tasks, wherein the plurality of subset-rules comprise a first subset rule for a fraud detection task and a second subset rule for a chargeback fraud detection task, wherein the first subset rule is different from the second subset rule.

Example 18. The system of example 16, wherein the at least one non-transitory computer readable medium stores instructions which, when executed by the one or more processors, cause the one or more processors to perform operations comprising updating the set of rules by: training the machine learning system based on a new set of training data from the plurality of platforms; generating one or more new outcomes based on the new set of training data; and generating a new set of rules based on the one or more new outcomes.

Example 19. The system of example 11, wherein the at least one non-transitory computer readable medium stores instructions which, when executed by the one or more processors, cause the one or more processors to implement one or more tasks based on the analysis of the request, wherein the one or more tasks comprise at least one of: a fraud detection task configured to determine whether the electronic transaction is indicative of a fraudulent activity, wherein the fraud detection task comprises determining whether a probability of fraud for the electronic transaction is greater than a predetermined threshold fraud value; a chargeback fraud detection task configured to determine a likelihood of a chargeback fraud for the electronic transaction, wherein the chargeback fraud detection task comprises determining whether the likelihood of a chargeback fraud is greater than a predetermined threshold chargeback fraud value; an authorization task configured to determine whether to authorize the request for the electronic transaction; an authentication task configured to determine whether to require an additional authenticating credential to authorize the request for the electronic transaction, wherein the fraud detection task is implemented before the chargeback fraud detection task, authorization task, and the authentication task; and a refund task configured to determine whether the electronic transaction corresponds to a chargeback case appropriate for a proactive refund.

Example 20. A non-transitory computer readable medium, the non-transitory computer readable medium storing instructions which, when executed by one or more processors of a computing system, cause the one or more processors to perform operations comprising: receiving a request from a first system for an electronic transaction; analyzing the request for the electronic transaction using one or more outcomes generated by a machine learning system that is trained based on a set of randomized training data using a plurality of platforms, wherein the analysis of the request comprises comparing data from the plurality of platforms, wherein an outcome from one platform among the plurality of platforms affect an outcome from another platform among the plurality of platforms; determining, by the one or more processors, a plurality of possible combinations of paths for processing the electronic transaction based on the analysis of the request; determining, by the one or more processors, a plurality of possible combination of tasks for processing the electronic transaction based on the analysis of the request; determining, by the one or more processors, an optimized path among the plurality of possible combinations of paths; determining, by the one or more processors, an optimal combination of tasks among the possible combination of tasks; and transmitting, by the one or more processors, the electronic transaction via the optimized path using the optimal combination of tasks.

**Claims**

1. A computer-implemented method comprising:

    receiving, by one or more processors, a request from a first system for an electronic transaction ;
    analyzing, by the one or more processors, the request for the electronic transaction using one or more outcomes generated by a machine learning system that is trained based on a set of randomized training data processed using a plurality platforms, wherein the analysis of the request comprises comparing data from the plurality of platforms, wherein the compared data from the plurality of platforms comprise outcomes from the plurality of platforms, wherein an outcome from one platform among the plurality of platforms affect an outcome from another platform among the plurality of platforms;
    determining, by the one or more processors, a plurality of possible combinations of paths for processing the electronic transaction based on the analysis of the request;

determining, by the one or more processors, a plurality of possible combination of tasks for processing the electronic transaction based on the analysis of the request;

determining, by the one or more processors, an optimized path among the plurality of possible combinations of paths;

determining, by the one or more processors, an optimal combination of tasks among the possible combination of tasks; and

transmitting, by the one or more processors, the electronic transaction via the optimized path using the optimal combination of tasks.

2. The computer-implemented method of claim 1, wherein the analyzing further comprises:

assessing, for a specific task, the data from the plurality of platforms;
determining a priority of the data for the specific task based on the assessment.

3. The computer-implemented method of claim 2, comprising:

determining that the specific task is the fraud detection task; and
prioritizing data from a fraud detection platform over data from other platforms.

4. The computer-implemented method of claim 1, further comprising generating a set of rules using the one or more outcomes from the machine learning system, wherein the analyzing the request for the electronic transaction comprises applying the set of rules to the request by assessing the electronic transaction based on one or more predetermined threshold values in the set of rules.

5. The computer-implemented method of claim 4, wherein the set of rules includes a plurality of subset-rules for each of one or more tasks, wherein the plurality of subset-rules comprise a first subset rule for a fraud detection task and a second subset rule for a chargeback fraud detection task, wherein the first subset rule is different from the second subset rule.

6. The computer-implemented method of claim 4, further comprising updating the set of rules by:

training the machine learning system based on a new set of training data from the plurality of platforms; and
generating one or more new outcomes based on the new set of training data; and
generating a new set of rules based on the one or more new outcomes.

7. The computer-implemented method of claim 6, wherein the set of rules are updated at a predetermined time interval.

8. The computer-implemented method of claim 1, further comprising implementing, by the one or more processors, one or more tasks based on the analysis of the request, wherein the one or more tasks comprise at least one of:

a fraud detection task configured to determine whether the electronic transaction is indicative of a fraudulent activity, wherein the fraud detection task comprises determining whether a probability of fraud for the electronic transaction is greater than a predetermined threshold fraud value;

a chargeback fraud detection task configured to determine a likelihood of a chargeback fraud for the electronic transaction, wherein the chargeback fraud detection task comprises determining whether the likelihood of a chargeback fraud is greater than a predetermined threshold chargeback fraud value;

an authorization task configured to determine whether to authorize the request for the electronic transaction;

an authentication task configured to determine whether to require an additional authenticating credential to authorize the request for the electronic transaction, wherein the fraud detection task is implemented before the chargeback fraud detection task, authorization task, and the authentication task; and

a refund task configured to determine whether the electronic transaction corresponds to a chargeback case appropriate for a proactive refund.

9. A system comprising:

one or more processors of a computing system; and
at least one non-transitory computer readable medium storing instructions which, when executed by the one or more processors, cause the one or more processors to perform operations comprising:

receiving a request from a first system for an electronic transaction;

analyzing the request for the electronic transaction using one or more outcomes generated by a machine learning system that is trained based on a set of randomized training data processed using a plurality of platforms, wherein the analysis of the request comprises comparing data from the plurality of platforms, wherein an outcome from one platform among the plurality of platforms affect an outcome from another platform among the plurality of platforms;

determining, by the one or more processors, a plurality of possible combinations of paths for processing the electronic transaction based on the analysis of the request;

determining, by the one or more processors, a plurality of possible combination of tasks for processing the electronic transaction based on the analysis of the request;

determining, by the one or more processors, an optimized path among the plurality of possible combinations of paths;

determining, by the one or more processors, an optimal combination of tasks among the possible combination of tasks; and

transmitting, by the one or more processors, the electronic transaction via the optimized path using the optimal combination of tasks.

10. The system of claim 9, wherein the analyzing further comprises:

assessing, for a specific task, the data from the plurality of platforms; and

determining a priority of the data for the specific task based on the assessment, and optionally, wherein when the specific task is the fraud detection task, data from a fraud detection platform is prioritized over data from other platforms.

11. The system of claim 9, wherein the at least one non-transitory computer readable medium stores instructions which, when executed by the one or more processors, cause the one or more processors to perform operations comprising: generating a set of rules using the one or more outcomes from the machine learning system, wherein analyzing the request for the electronic transaction comprises applying the set of rules to the request by assessing the electronic transaction based on one or more predetermined threshold values in the set of rules.

12. The system of claim 11, wherein:

the set of rules includes a plurality of subset-rules for each of one or more tasks, wherein the plurality of subset-rules comprise a first subset rule for a fraud detection task and a second subset rule for a chargeback fraud detection task, wherein the first subset rule is different from the second subset rule; and/or

the at least one non-transitory computer readable medium stores instructions which, when executed by the one or more processors, cause the one or more processors to perform operations comprising updating the set of rules by:

training the machine learning system based on a new set of training data from the plurality of platforms;

generating one or more new outcomes based on the new set of training data; and

generating a new set of rules based on the one or more new outcomes.

13. The computer-implemented method of claim 1 or the system of claim 9, wherein the plurality of platforms comprise at least two of: a fraud detection platform configured to detect a fraudulent activity, a refund optimization platform configured to optimize a refund process, an authorization optimization platform configured to optimize an authorization process, an authentication optimization platform configured to optimize an authentication process, a chargeback detection platform configured to detect a chargeback fraud, a token optimization platform configured to optimize a tokenization process, and a PIN suppression platform configured to handle a PIN associated electronic transaction.

14. The computer-implemented method of claim 1 or the system of claim 9, wherein the data to be compared comprise predictive data generated from the plurality of platforms, wherein the predictive data is at least one of a probability of approval of the electronic transaction, a probability of a chargeback, a probability of fraud, a value of the electronic transaction, and an estimated latency in communicating the electronic transaction within a network system.

15. A non-transitory computer readable medium, the non-transitory computer readable medium storing instructions which, when executed by one or more processors of a computing system, cause the one or more processors to perform operations comprising:

receiving a request from a first system for an electronic transaction;

analyzing the request for the electronic transaction using one or more outcomes generated by a machine learning system that is trained based on a set of randomized training data using a plurality of platforms, wherein the analysis of the request comprises comparing data from the plurality of platforms, wherein an outcome from one platform among the plurality of platforms affect an outcome from another platform among the plurality of platforms;

determining, by the one or more processors, a plurality of possible combinations of paths for processing the electronic transaction based on the analysis of the request;

determining, by the one or more processors, a plurality of possible combination of tasks for processing the electronic transaction based on the analysis of the request;

determining, by the one or more processors, an optimized path among the plurality of possible combinations of paths;

determining, by the one or more processors, an optimal combination of tasks among the possible combination of tasks; and

transmitting, by the one or more processors, the electronic transaction via the optimized path using the optimal combination of tasks.

**FIG. 1**

EP 4 779 547 A1

EP 4 779 547 A1

AUTHORIZATION OPTIMIZATION PLATFORM 121

DATA
PROCESSING
MODULE 201

COMPUTATION
MODULE 203

DECISION MODULE
205

DATABASE 207

*FIG. 2A*

FRAUD DETECTION PLATFORM 123

FRAUD DETECTION ENGINE 211

MEMORY 213

PROFILE DATABASE 215

APP SERVER 216

WEB SERVER 217

TRANSACTION DATABASE 219

**FIG. 2B**

## CHARGEBACK DETECTION PLATFORM 125

| CHARGEBACK PROCESSING ENGINE 221 | SEARCH ENGINE 222 | HISTORICAL DATA IMPORTER 223 | PROFILE DB 224 |
|---|---|---|---|
| DISPUTE MONITOR 225 | REPORT GENERATOR 226 | HISTORICAL CHARGEBACK DATABASE 227 | HISTORICAL TRANSACTIONAL DATABASE 228 |

### DATA AGGREGATION/TRANSFORMATION ENGINE 229

CLEANING    MERGING    SPLITTING

SORTING    MOVING    • • •

# FIG. 2C

EP 4 779 547 A1

TOKEN OPTIMIZATION PLATFORM 127

TOKENIZER/DE-TOKENIZER 231

ANALYTICS PROCESSOR 233

TEXT ANALYZER

CLUSTERING

THESAURUS

RELEVANCY

CUSTOM RULE APPLICATION

## FIG. 2D

# REFUND OPTIMIZATION PLATFORM 129

| | | | |
|---|---|---|---|
| REFUND PROCESSING ENGINE 241 | SEARCH ENGINE 242 | HISTORICAL DATA IMPORTER 243 | PROFILE DB 244 |
| DISPUTE MONITOR 245 | REPORT GENERATOR 246 | HISTORICAL CHARGEBACK DATABASE 247 | HISTORICAL TRANSACTIONAL DATABASE 248 |

## DATA AGGREGATION/TRANSFORMATION ENGINE 249

CLEANING    MERGING    SPLITTING

SORTING    MOVING    • • •

# FIG. 2E

EP 4 779 547 A1

AUTHORIZATION OPTIMIZATION PLATFORM 131

AUTHENTICATION PROCESSING MODULE 251

AUTHENTICATION COMPUTATION MODULE 253

AUTHENTICATION DECISION MODULE 255

AUTHENTICATION USER INTERFACE MODULE 257

*FIG. 2F*

EP 4 779 547 A1

PIN SUPPRESSION PLATFORM 133

PIN SUPPRESSION
PROCESSING
MODULE 261

PIN COMPUTATION
MODULE 263

PIN DECISION
MODULE 265

PIN USER
INTERFACE
MODULE 267

# FIG. 2G

START

301 — RECEIVE A REQUEST FROM A FIRST SUB-SYSTEM FOR AN ELECTRONIC MESSAGE ASSOCIATED WITH AN ACCESS DEVICE

303 — ANALYZE THE REQUEST FOR THE ELECTRONIC MESSAGE USING ONE OR MORE OUTCOMES GENERATED BY A MACHINE LEARNING SYSTEM THAT IS TRAINED BASED ON A SET OF TRAINING DATA FROM A PLURALITY OF PLATFORMS

305 — IMPLEMENT ONE OR MORE TASKS BASED ON THE ANALYSIS OF THE REQUEST

*FIG. 3A*

EP 4 779 547 A1

**FIG. 3B**

FIG. 4

**FIG. 5**

EP 4 779 547 A1

## EUROPEAN SEARCH REPORT

Europäisches Patentamt
European Patent Office
Office européen des brevets

**Application Number**

EP 26 15 2108

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/327504 A1 (KOREN EREZ [IL] ET AL) 13 October 2022 (2022-10-13) * abstract * * paragraph [0002] - paragraph [0014] * * paragraph [0036] - paragraph [0162] * * claims 1-23; figures 1-6 * | 1-15 | INV. G06Q20/02 G06Q20/08 G06Q20/40 |
| A | US 2019/340589 A1 (LEVY DANA [IL] ET AL) 7 November 2019 (2019-11-07) * abstract * * paragraph [0002] - paragraph [0061] * * paragraph [0075] - paragraph [0270] * * claims 1-22; figures 1-7 * | 1-15 | |
| A | US 11 282 075 B1 (KETTLER DENNIS A [US] ET AL) 22 March 2022 (2022-03-22) * the whole document * | 1-15 | |

**TECHNICAL FIELDS SEARCHED (IPC)**

G06Q

The present search report has been drawn up for all claims

| Place of search | Date of completion of the search | Examiner |
|---|---|---|
| The Hague | 8 May 2026 | Bassanini, Anna |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 26 15 2108

08-05-2026

| Patent document cited in search report | Publication date | Patent family member(s) | | Publication date |
|---|---|---|---|---|
| US 2022327504 A1 | 13-10-2022 | CA | 3216649 A1 | 20-10-2022 |
| | | EP | 4323944 A1 | 21-02-2024 |
| | | US | 2022327504 A1 | 13-10-2022 |
| | | WO | 2022221190 A1 | 20-10-2022 |
| US 2019340589 A1 | 07-11-2019 | NONE | | |
| US 11282075 B1 | 22-03-2022 | US | 11282075 B1 | 22-03-2022 |
| | | US | 2022164792 A1 | 26-05-2022 |
| | | US | 2023351376 A1 | 02-11-2023 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 63524524
- US 11107083 B
- US 11488170 B
- US 78132120
- US 82525517

- US 11790367 B
- US 10990972 B
- US 10706393 B
- US 11282075 B